(19) Europäisches Patentamt
European Patent Office
Office européen des brevets

(11) EP 3 681 626 B1

(12) **FASCICULE DE BREVET EUROPEEN**

(45) Date de publication et mention de la délivrance du brevet:
**09.10.2024 Bulletin 2024/41**

(21) Numéro de dépôt: **18765674.9**

(22) Date de dépôt: **14.09.2018**

(51) Classification Internationale des Brevets (IPC):
***B01J 19/00*** *(2006.01)*

(52) Classification Coopérative des Brevets (CPC):
**B01J 19/0093; B01D 71/381;** B01J 2219/00783; B01J 2219/00804; B01J 2219/0081; B01J 2219/00833; B01J 2219/00837

(86) Numéro de dépôt international:
**PCT/EP2018/074955**

(87) Numéro de publication internationale:
**WO 2019/053219 (21.03.2019 Gazette 2019/12)**

(54) **DISPOSITIF FLUIDIQUE D'ASSAINISSEMENT D'UN FLUIDE ET PROCEDE D'ASSAINISSEMENT ASSOCIE**

FLUIDISCHE FLUIDREINIGUNGSVORRICHTUNG UND ZUGEHÖRIGES REINIGUNGSVERFAHREN

FLUIDIC FLUID PURIFYING DEVICE AND ASSOCIATED PURIFYING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2017 FR 1758527**

(43) Date de publication de la demande:
**22.07.2020 Bulletin 2020/30**

(73) Titulaire: **Eden Microfluidics**
**75011 Paris (FR)**

(72) Inventeur: **CARGOU, Sébastien**
**75003 Paris (FR)**

(74) Mandataire: **Regimbeau**
**20, rue de Chazelles**
**75847 Paris Cedex 17 (FR)**

(56) Documents cités:
**WO-A1-88/06941**
**WO-A2-2010/049515**
**CN-A- 106 745 673**
**US-A1- 2008 257 811**
**US-A1- 2016 311 704**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 681 626 B1

## Description

### DOMAINE DE L'INVENTION

L'invention concerne un dispositif fluidique d'assainissement d'un fluide et un procédé d'assainissement associé, par exemple utilisé pour dépolluer des eaux usées, des solutions organiques et/ou des gaz.

### ETAT DE LA TECHNIQUE

Les eaux usées sont typiquement dépolluées par des stations d'épuration, puis rejetées, après traitement, dans des milieux naturels comme des rivières ou dans des zones côtières maritimes. La qualité des eaux usées traitées par les stations d'épuration n'est généralement pas suffisante pour pouvoir réintroduire les eaux traitées directement à l'usage de l'Homme ou des animaux, ce qui empêche de préserver les réserves d'eaux douces.

De manière connue, le traitement des eaux usées peut comprendre :

- la coagulation, la floculation et la décantation des eaux usées, qui permettent d'éliminer environ 60% des suspensions solides comprises dans les eaux usées. Ces traitements permettent également de réduire la consommation chimique et biochimique en oxygène lors d'étapes ultérieures du traitement des eaux usées ;
- la filtration granulée, l'exposition aux rayons UVc et un traitement mettant en oeuvre une osmose inverse ;
- une dégradation par des procédés bactériologiques anaérobiques permettant de traiter les graisses, huiles, virus, bactéries et certains engrais.

Toutefois, ces traitements ne sont pas en mesure de purifier les eaux usées en agents micropolluants. On désigne typiquement par « agent micropolluant » un agent polluant présent dans les eaux usées à une faible concentration, typiquement comprise entre 0,1 $ng.L^{-1}$ et 100 $\mu g.L^{-1}$. Les agents micropolluants peuvent comprendre des agents polluants organiques persistants (d'acronyme P.O.P.), utilisés comme pesticides, solvants, produits pharmaceutiques et produits chimiques industriels, ainsi que des agents polluants pharmaceutiques persistants environnementaux (d'acronyme E.P.P.P.). Ces deux types d'agents micropolluants sont toxiques et dangereux pour la santé humaine, animale, ainsi que pour l'équilibre de l'écosystème. Depuis 2001, la convention de Stockholm (Stockholm Convention on persistant organic pollutants, 2001) vise à restreindre la production et l'utilisation de P.O.P.

De manière connue, les filtres à charbon actif peuvent être utilisés pour purifier les eaux usées d'agents micropolluants, particulièrement de composés organiques. L'eau traitée par des filtres à charbon actif peut être réutilisée pour des applications industrielles.

Cependant, les filtres à charbon actif ne permettent pas de purifier l'eau du sodium, de nombreux microbes, d'ions fluorures, et des nitrates. De plus, seuls certains types spécifiques de charbons actifs permettent de filtrer les métaux lourds comme le plomb.

De manière connue, l'ozonation permet d'inactiver certains virus, bactéries et/ou kystes dans les eaux usées. L'ozonation est significativement plus efficace que le traitement au chlore (elle est par exemple 3000 fois plus germicide). En effet, la conversion rapide de l'ozone en oxygène dans l'eau permet de limiter ou de supprimer la plupart des résidus toxiques lors du traitement.

Cependant, l'ozone est biologiquement extrêmement réactif et toxique sur les organismes vivants, ce qui présente un danger lors de l'utilisation ultérieure d'eaux traitées à l'ozone par des humains ou des animaux. De plus, la solubilité de l'ozone varie sensiblement avec la température : des ajustements continus et saisonniers de la concentration d'ozone utilisé dans le traitement des eaux usées sont nécessaires pour assurer un traitement optimal sans dépasser une dose toxique pour les usagers, et ainsi répondre aux normes de qualité imposées par l'utilisation de ce traitement. De plus, l'ozonation entraîne la formation de bromate dans l'eau, qui peut être cancérogène. L'ozonation nécessite également des installations utilisant de l'oxygène liquide pur, ou de l'air comprimé, purifié et séché, et une puissance électrique entraînant un coût élevé du traitement de l'eau.

Il est également connu d'utiliser des filtres comprenant des membranes à fibres creuses pour purifier des eaux usées d'agents micropolluants. Les fibres creuses présentent un diamètre généralement compris entre 0,6 mm et 2 mm et peuvent être produites par extrusion du matériau membranaire. L'eau est traitée en contrôlant un écoulement transmembranaire.

Toutefois, les membranes à fibres creuses présentent une résistance hydraulique élevée. Pour contrôler un débit d'eau purifiée assez élevé pour une application industrielle, il est nécessaire de commander des pressions comprises généralement entre 3 et 15 bars entre l'entrée et la sortie d'une membrane. De plus, la morphologie des fibres entraîne un blocage des pores par des objets à filtrer d'une taille supérieure aux agents micropolluants. Il est alors nécessaire de retro-laver les fibres, c'est-à-dire de contrôler un écoulement dans le sens opposé de l'écoulement de traitement des eaux usées pour nettoyer les membranes à fibres creuses. Les pressions utilisées pour le nettoyage des

membranes sont typiquement deux à trois fois plus élevées que les pressions utilisées pour le traitement de l'eau : ces pressions, combinées à l'emploi de solutions chimiques de nettoyage, affectent les performances mécaniques des fibres jusqu'à leur rupture.

US 5895573 décrit, pour résoudre ce problème, un dispositif comprenant des membranes successives dans lesquelles le diamètre des pores formés par les fibres diminue progressivement avec le sens de l'écoulement de l'eau à traiter.

Toutefois, cette solution ne permet pas de traiter des eaux usées à une pression inférieure à 0,5 bar, tout en présentant une longue durée de vie en raison des capacités mécaniques des fibres décrites. Ces conditions de pression ne permettent pas d'envisager de relier directement un dispositif d'assainissement à une sortie d'eaux usées et nécessitent une adaptation de la pression aux bornes du dispositif.

De manière plus générale, l'utilisation de membranes à fibres creuses limite le dimensionnement du dispositif de traitement des eaux, limite le choix des matériaux utilisables pour la fabrication du dispositif de traitement, impose des contraintes sur l'écoulement des eaux usées dans le dispositif de traitement, nécessite des connectiques compatibles avec l'utilisation de membranes à fibres creuses. De plus, l'assemblage et le conditionnement des faisceaux de fibres creuses pour la fabrication d'un dispositif d'assainissement peut être délicat et coûteux. Enfin, le traitement des fibres creuses avec des agents dépolluants ou d'assainissement est peu efficace, coûteux et énergivore. WO8806941 divulgue un dispositif fluidique de filtration fine comprenant plusieurs couches, chacune avec des canaux de 15-20 $\mu$m ciselées de façon à former un un réseau fluidique 3D. Les canaux peuvent être utilisés comme support pour catalyseurs et microorganismes. Métaux, polymères et semi-conducteurs peuvent être utilisés comme matériaux pour les couches.

Par ailleurs, US 20170081219 décrit un système d'assainissement de l'eau par électro-flotation ou électrocoagulation dans un containeur comprenant des électrodes plongées dans un écoulement d'eaux usées. Cette méthode d'assainissement ne permet de traiter que les agents polluants susceptibles d'être dégradés par électro-flottaison ou électrocoagulation.

US 7740752 décrit un dispositif d'assainissement comprenant des plans d'assainissement empilés, configurés pour recevoir des nappes de liquide à assainir. Cette méthode permet de ralentir le fluide à traiter et ainsi d'optimiser la sédimentation des particules à filtrer dans le fluide. Cette méthode ne permet pas de filtrer des agents polluants trop petits pour être sujets à la sédimentation.

Enfin, Wang *et al.* (Wang, N., Zhang, X., Wang, Y., Yu, W., & Chan, H. L., 2014, Microfluidic reactors for photocatalytic water purification, Lab on a Chip, 14(6), 1074-1082) décrivent un canal microfluidique dont la surface intérieure présente une couche de vanadate de bismuth. Des paires électrons-trous sont produites par le vanadate de bismuth lors d'une excitation lumineuse sur celui-ci, et permettent de former des radicaux libres en solution. Ces radicaux libres entraînent une dégradation du bleu de méthylène en solution.

Toutefois, le débit de purification du système microfluidique décrit est au maximum égal à 2 mL/h et est incompatible avec des applications industrielles, par exemple à des débits supérieurs à 1000 L/h. Une application envisagée d'un tel système est un kit d'évaluation des performances d'un matériau photocatalytique tel que le vanadate de bismuth.

Le document WO 2017134250 et le document FR 3047484 décrivent une utilisation d'un polycondensat de cyclodextrine ou d'une composition comprenant un tel polycondensat comme agent d'assainissement.

## RESUME DE L'INVENTION

Un but de l'invention est de proposer un dispositif d'assainissement de fluide permettant de purifier le fluide d'agents micropolluants. Un autre but de l'invention est de proposer un dispositif d'assainissement permettant d'assainir un fluide à un débit assez élevé pour une application industrielle tout en appliquant une différence de pression usuelle, c'est-à-dire inférieure à 5 bars, et préférentiellement à 1 bar, entre l'entrée et la sortie du dispositif. Enfin, un autre but de l'invention est de proposer un dispositif robuste, qui puisse être réutilisé après une régénération des éléments spécifiques à l'assainissement et/ou des contraintes thermiques ou mécaniques élevées des éléments d'assainissement.

En particulier, un objet de l'invention est un dispositif fluidique d'assainissement adapté à purifier un fluide d'au moins un agent polluant, comprenant un réseau fluidique d'assainissement, caractérisé en ce que le réseau fluidique d'assainissement est un réseau tridimensionnel de canaux microfluidiques, chaque canal microfluidique étant défini par une ou plusieurs parois étanches au fluide, chaque canal microfluidique comportant au moins une zone sur la surface intérieure dudit canal microfluidique présentant au moins un agent d'assainissement autonome et chaque canal microfluidique présentant au niveau d'une telle zone une hauteur inférieure à 60 $\mu$m dans une direction normale à la direction principale d'écoulement du fluide, le ou les agents d'assainissement autonomes et le dimensionnement desdites zones étant configurés pour permettre une capture et/ou une dégradation d'au moins 10 % des agents polluants par lesdites zones, pour au moins un débit du fluide à purifier, le dispositif comprenant une pluralité de canaux de distribution et une pluralité de canaux collecteurs, le réseau fluidique d'assainissement reliant les canaux de distribution et les canaux collecteurs et étant mis en oeuvre au moins par un réseau de canaux microfluidiques reliés en parallèle.

On comprend qu'avec un tel dispositif, il est possible d'assainir un fluide d'un ou plusieurs agents polluants,

particulièrement micropolluants, en confinant le fluide à purifier dans des microcanaux. La diffusion des agents micropolluants vers les agents d'assainissement présentés aux parois permet de purifier le fluide sans augmenter la résistance hydraulique du dispositif et ainsi de permettre la purification d'agents micropolluants à des débits industriels.

L'invention est avantageusement complétée par les caractéristiques suivantes, prises individuellement ou en l'une quelconque de leurs combinaisons techniquement possibles :

- le réseau tridimensionnel de canaux microfluidiques (9) comprenant une superposition de réseaux bidimensionnels de canaux microfluidiques (9), le réseau fluidique d'assainissement (8) reliant les canaux de distribution (40) et les canaux collecteurs (41),
- le dispositif comprend au moins trois couches empilées, au moins deux faces d'une ou plusieurs couches présentant, en regard d'au moins deux couches, un motif en enfoncement configuré pour former au moins deux réseaux bidimensionnels de canaux microfluidiques lorsque les au moins trois couches sont empilées ;
- le dispositif comprend au moins un canal de distribution et au moins un canal collecteur, le réseau fluidique d'assainissement reliant le ou les canaux de distribution et le ou les canaux collecteurs, la résistance hydrodynamique du ou des canaux de distribution et du ou des canaux collecteurs étant strictement inférieure à la résistance hydrodynamique du réseau fluidique d'assainissement ;
- le motif est configuré pour former au moins en partie un ou plusieurs canaux de distribution, et au moins en partie un ou plusieurs canaux collecteur ;
- le dispositif comprend au moins un canal primaire traversant une pluralité de couches adjacentes pour déboucher respectivement dans au moins un canal de distribution et/ou au moins un canal collecteur formés entre deux couches ;
- l'empilement comprend une superposition de sous-empilements chacun formés de deux couches, lesdites deux couches étant dans des matériaux différents ;
- l'empilement comprend une superposition de sous-empilements chacun formé de trois couches consécutives, les deux couches de part et d'autre du sous-empilement étant dans le même matériau ;
- le matériau d'une seconde couche présente une fraction massique en agent d'assainissement autonome supérieure à 0,15 ;
- le matériau d'une couche comprend un polycondensat de cyclodextrines ;
- le matériau d'une couche comprend un copolymère éthylène-alcool vinylique ;
- lequel le matériau d'au moins deux couches en contact comprend un copolymère bloc, le copolymère bloc présentant une température de transition vitreuse inférieure à 0°C et le matériau présentant un module de Young inférieur à 10 MPa ;
- le matériau d'une couche comprend un élastomère thermoplastique styrénique ;
- le matériau d'une couche est au moins choisi parmi du verre et du silicium ;
- un agent d'assainissement autonome est adapté à capturer l'agent polluant et est choisi au moins parmi une cyclodextrine, un charbon actif, un calixarène, de l'alumine activée, un gel de silice, du graphite, une argile et une zéolithe ;
- un agent d'assainissement autonome est adapté à dégrader l'agent polluant et est au moins choisi parmi une laccase, une peroxydase de raifort, une lignine peroxydase, une manganèse péroxydase, une tyrosinase, du permanganate de potassium et un persulfate et une enzyme fongique ;
- au moins une paroi d'un canal microfluidique présente une pluralité de reliefs s'étendant selon au moins une direction différente de la direction principale d'écoulement du fluide ;
- les reliefs se présentent sous forme de stries et/ou de chevrons.

Un autre objet de l'invention est un ensemble d'assainissement adapté à purifier un fluide d'au moins un agent polluant, comprenant une pluralité de dispositifs fluidiques, chaque dispositif fluidique comprenant un réseau fluidique d'assainissement, ledit réseau fluidique d'assainissement étant un réseau tridimensionnel de canaux microfluidiques, chaque canal microfluidique étant défini par une ou plusieurs parois étanches au fluide, chaque canal microfluidique comportant au moins une zone sur la surface intérieure dudit canal microfluidique présentant au moins un agent d'assainissement autonome et chaque canal microfluidique présentant au niveau d'une telle zone une hauteur inférieure à 60 $\mu$m dans une direction normale à la direction principale d'écoulement du fluide, le ou les agents d'assainissement autonomes et le dimensionnement desdites zones étant configurés pour permettre une capture et/ou une dégradation d'au moins 10 % des agents polluants par lesdites zones, pour au moins un débit du fluide à purifier, le dispositif comprenant une pluralité de canaux de distribution (40) et une pluralité de canaux collecteurs (41), le réseau fluidique d'assainissement (8) reliant les canaux de distribution et les canaux collecteurs et étant mis en oeuvre au moins par un réseau de canaux microfluidiques (9) reliés en parallèle, les dispositifs fluidiques étant reliés fluidiquement en série et/ou en parallèle.

Un autre objet de l'invention est un système d'assainissement comprenant au moins un dispositif fluidique d'assainissement adapté à purifier un fluide d'au moins un agent polluant, chaque dispositif fluidique comprenant un

réseau fluidique d'assainissement, ledit réseau fluidique d'assainissement étant un réseau tridimensionnel de canaux microfluidiques, chaque canal microfluidique étant défini par une ou plusieurs parois étanches au fluide, chaque canal microfluidique comportant au moins une zone sur la surface intérieure dudit canal microfluidique présentant au moins un agent d'assainissement autonomes et chaque canal microfluidique présentant au niveau d'une telle zone une hauteur inférieure à 60 $\mu$m dans une direction normale à la direction principale d'écoulement du fluide, le ou les agents d'assainissement autonomes et le dimensionnement desdites zones étant configurés pour permettre une capture et/ou une dégradation d'au moins 10 % des agents polluants par lesdites zones, pour au moins un débit du fluide à purifier, le dispositif comprenant une pluralité de canaux de distribution (40) et une pluralité de canaux collecteurs (41), le réseau fluidique d'assainissement (8) reliant les canaux de distribution et les canaux collecteurs et étant mis en oeuvre au moins par un réseau de canaux microfluidiques (9) reliés en parallèle, le système comprenant également un dispositif de conditionnement de la température d'un canal microfluidique.

L'invention est avantageusement complétée par les caractéristiques suivantes, prises individuellement ou en l'une quelconque de leurs combinaisons techniquement possibles :

- le système d'assainissement est portable et/ou autonome en énergie électrique ;
- le système comprend au moins une source de rayonnement ultrasonore.

Un autre objet de l'invention est un procédé d'assainissement adapté à purifier un fluide d'au moins un agent polluant, comprenant une étape dans laquelle on fait passer le fluide dans un réseau fluidique d'assainissement tridimensionnel de canaux microfluidiques à un débit du fluide à purifier, chaque canal microfluidique comportant au moins une zone sur la surface intérieure dudit canal microfluidique présentant au moins un agent d'assainissement autonome et chaque canal microfluidique présentant au niveau d'une telle zone une hauteur inférieure à 60 $\mu$m dans une direction normale à la direction principale d'écoulement du fluide, le ou les agents d'assainissement autonomes et le dimensionnement desdites zones étant configurés pour permettre une capture et/ou une dégradation d'au moins 10 % des agents polluants par lesdites zones lors de l'écoulement du fluide audit débit dans le réseau de canaux microfluidiques, le procédé comprenant la commande d'une différence de pression entre l'entrée et la sortie d'un dispositif de manière à entraîner ledit débit de fluide dans ledit dispositif, le dispositif comprenant au moins un canal de distribution reliée à l'entrée et au moins un canal collecteur reliée à la sortie, le réseau fluidique d'assainissement reliant le ou les canaux de distribution et le ou les canaux collecteurs, la résistance hydrodynamique du ou des canaux de distribution et du ou des canaux collecteurs étant strictement inférieure à la résistance hydrodynamique du réseau fluidique d'assainissement et la valeur absolue de la différence de pression étant inférieure à 5 bar.

L'invention est avantageusement complétée par les caractéristiques suivantes, prises individuellement ou en l'une quelconque de leurs combinaisons techniquement possibles :

- on commande une différence de pression entre l'entrée et la sortie d'un dispositif de manière à entraîner ledit débit de fluide dans ledit dispositif, le dispositif comprenant au moins un canal de distribution reliée à l'entrée et au moins un canal collecteur reliée à la sortie, le réseau fluidique d'assainissement reliant le ou les canaux de distribution et le ou les canaux collecteurs, la résistance hydrodynamique du ou des canaux de distribution et du ou des canaux collecteurs étant strictement inférieure à la résistance hydrodynamique du réseau fluidique d'assainissement et la valeur absolue de la différence de pression étant inférieure à 5 bar ;
- le débit est tel que le nombre de Péclet de l'agent polluant dans l'écoulement du fluide parcourant la longueur des zones d'assainissement dans le sens de l'écoulement est inférieur à $10^4$;
- le fluide est recirculé dans les canaux microfluidiques ;
- pour la purification d'un agent polluant choisi parmi un élément métallique et une molécule organique présentant un coefficient de partage octanol/eau $LogK_{ow}$ supérieur à 1,5, l'agent d'assainissement autonome est une cyclodextrine et/ou un polycondensat de cyclodextrine ;
- le procédé comprend une étape dans laquelle on fait passer un fluide de lavage et/ou de régénération des canaux microfluidique.

Un autre objet de l'invention est un procédé de fabrication d'un dispositif fluidique d'assainissement adapté à purifier un fluide d'au moins un agent polluant, comprenant un réseau fluidique d'assainissement, le réseau fluidique d'assainissement étant un réseau tridimensionnel de canaux microfluidiques, chaque canal microfluidique étant défini par une ou plusieurs parois étanches au fluide, chaque canal microfluidique comportant au moins une zone sur la surface intérieure dudit canal microfluidique présentant au moins un agent d'assainissement autonome et chaque canal microfluidique présentant au niveau d'une telle zone une hauteur inférieure à 60 $\mu$m dans une direction normale à la direction principale d'écoulement du fluide, le ou les agents d'assainissement autonomes et le dimensionnement desdites zones étant configurés pour permettre une capture et/ou une dégradation d'au moins 10 % des agents polluants par lesdites zones, pour au moins un débit du fluide à purifier, le dispositif fluidique 1 comprenant au moins trois couches empilées,

au moins deux faces d'une ou plusieurs couches présentant, en regard d'au moins deux couches, un motif en enfoncement configuré pour former au moins un réseau bidimensionnel de canaux microfluidiques lorsque les deux couches sont empilées, le matériau de chacune des couches présentant une température de transition vitreuse inférieure à 0°C, le collage entre deux couches étant réalisé uniquement par la mise en contact des deux couches à une température comprise entre 0°C et 50° C.

**DEFINITIONS**

On désigne par le terme « agent polluant » tout agent chimique et/ou biologique au moins potentiellement toxique dans un fluide pour l'Homme et/ou l'animal lors de l'usage et/ou de la consommation de ce fluide, et particulièrement :

- les cations métalliques tels que les cations de plomb, de cadmium, de mercure, de mercure, de fer et de cuivre ;
- les huiles et graisses d'origine minérale, animale, végétale, marine ou synthétique, parmi lesquelles les mélanges d'hydrocarbures pétroliers, les produits antioxydants et les antigels ;
- les agent polluants gazeux, tels que les composés organiques volatils, (C.O.V.), parmi lesquels des composés chlorés tels que le chlorobenzène, le tétrachlorure de carbone et le monochlorure de vinyle ;
- les agents polluants compris dans les eaux potables, les eaux industrielles et les effluents hospitaliers et agricoles, et par exemple les produits herbicides, pesticides, perturbateurs endocriniens, les substances POP et EPPP, tels que décrites précédemment et/ou comprises dans la liste de la convention de Stockholm.

On désigne par le terme « purifier », en particulier par le terme « purifier un fluide d'au moins un agent polluant » le traitement permettant de réduire la concentration de l'agent polluant dans le fluide d'au moins 10 %, préférentiellement d'au moins 40 % préférentiellement d'au moins 90 % et préférentiellement de 100 %.

On désigne par le terme « agent d'assainissement » tout composé chimique et/ou biologique adapté à capturer et/ou à dégrader un agent polluant.

On désigne par « agent d'assainissement autonome » tout agent d'assainissement adapté à capturer et/ou à dégrader un agent polluant sans stimulation physique externe à l'agent d'assainissement autonome, comme par exemple une stimulation lumineuse ou électrique.

On désigne par le terme « agent de capture » tout composé chimique, en particulier tout polymère, capable de piéger une substance ou un mélange de substances au sein de sa structure, de l'immobiliser et/ou de retarder sa libération vers l'extérieur.

On désigne par le terme « longueur » d'un canal la taille d'un canal selon la direction principale d'écoulement du fluide.

On désigne par « largeur d'un canal » la taille maximale d'un canal dans une direction transverse à la direction principale d'écoulement du fluide.

On définit par « hauteur d'un canal » la taille minimale d'un canal dans une direction transverse à la direction principal d'écoulement du fluide.

On qualifie un matériau d'« étanche » un matériau dont la perméabilité par rapport à un fluide est inférieure à 3000 barrer à 25°C, c'est-à-dire $3000.10^{-10}$ $\left. cm_{STP}^3.cm \middle/ cm^2.s.cmHg \right.$ à 25°C, où $cm^3_{STP}$ correspond au centimètre cubique standard, cm correspond à l'épaisseur du matériau et cmHg correspond à la chute de pression au travers du matériau.

On désigne par « taux d'abattement » la proportion d'agent polluant purifiée par un système d'assainissement au regard de la quantité initialement introduite dans le système.

On désigne par « réseau bidimensionnel » d'éléments un réseau bidimensionnel au sens strict, c'est-à-dire dont l'ensemble des éléments peuvent être répartis dans un plan, mais pas dans une ligne. Plus particulièrement, on désigne par « réseau bidimensionnel de canaux » un réseau de canaux dans lequel chaque canal est réparti dans le même plan, quelle que soit l'orientation de chaque canal. Préférentiellement, les canaux microfluidiques du réseau d'assainissement de l'invention forment au moins un réseau bidimensionnel de canaux.

On désigne par « réseau tridimensionnel » d'éléments un réseau tridimensionnel au sens strict, c'est-à-dire dont l'ensemble des éléments peuvent être répartis dans l'espace, mais pas dans un plan. Plus particulièrement, on désigne par « réseau tridimensionnel de canaux » un réseau de canaux dans lequel chaque canal est réparti dans l'espace mais pas dans un plan, quelle que soit l'orientation de chaque canal.

On désigne par « résistance hydrodynamique » le rapport entre la différence de pression amont-aval dans un canal ou plus généralement un réseau de canaux ou une conduite, et entre le débit volumique du fluide passant par le

canal ou plus généralement le réseau de canaux ou la conduite. On peut mesurer cette résistance par l'écoulement d'un liquide dans le canal, même dans le cas d'une purification d'un fluide gazeux par le dispositif fluidique. La résistance hydrodynamique peut être calculée pour l'eau à 25°C.

## PRESENTATION DES FIGURES

D'autres caractéristiques et avantages ressortiront encore de la description qui suit, laquelle est purement illustrative et non limitative, et doit être lue en regard des figures annexées, parmi lesquelles :

- la figure 1 illustre schématiquement un réseau fluidique de distribution, un réseau fluidique collecteur et un réseau fluidique d'assainissement d'un dispositif fluidique ;
- la figure 2 illustre schématiquement l'assainissement d'un agent polluant dans un canal microfluidique ;
- la figure 3 illustre schématiquement le réseau fluidique de distribution relié au réseau fluidique collecteur par un réseau de canaux microfluidiques ;
- la figure 4 illustre schématiquement une coupe d'un canal microfluidique relié au réseau fluidique de distribution et au réseau fluidique collecteur ;
- la figure 5 illustre schématiquement des canaux fluidiques formés par l'empilement de deux couches ;
- la figure 6 illustre schématiquement différentes deuxièmes couches ;
- la figure 7 illustre schématiquement le réseau fluidique de distribution relié au réseau fluidique collecteur par un réseau de canaux microfluidiques ;
- la figure 8 illustre schématiquement le réseau fluidique de distribution relié au réseau fluidique collecteur par un réseau de canaux microfluidiques ;
- la figure 9 illustre schématiquement le réseau fluidique de distribution relié au réseau fluidique collecteur par un réseau de canaux microfluidiques ;
- la figure 10 illustre schématiquement l'agencement d'une partie du réseau fluidique de distribution, d'une partie du réseau fluidique collecteur et d'une partie du réseau fluidique d'assainissement sur une couche ;
- la figure 11 illustre schématiquement un empilement de premières et de deuxièmes couches ;
- la figure 12 illustre schématiquement un empilement de premières et de deuxièmes couches ;
- la figure 13 illustre schématiquement un dispositif fluidique ;
- la figure 14 illustre schématiquement le connecteur de distribution d'un dispositif microfluidique ;
- la figure 15 illustre schématiquement le connecteur de collection d'un dispositif microfluidique ;
- la figure 16 illustre schématiquement l'architecture générale d'un système d'assainissement ;
- la figure 17 illustre schématiquement un réseau de dispositifs fluidiques ;
- la figure 18 illustre schématiquement un procédé d'assainissement fluidique.

## DESCRIPTION DETAILLEE

*Eléments théoriques*

La relation de Stokes-Einstein, décrite par la formule (1) permet de relier le coefficient de diffusion *D* d'un agent polluant 3 dans un fluide à sa mobilité $\mu$, à la température absolue *T* et à la constante de Boltzmann $k_B$.

$$D = \mu k_B T \qquad (1)$$

Contrairement aux agents polluant de diamètres élevés, dont on peut par exemple purifier l'eau par sédimentation, de nombreux agents micropolluants ont un coefficient de diffusion élevé. Le plomb a par exemple un coefficient de diffusion d'environ $5.10^{-10}$ $m^2.s^{-1}$ dans l'eau à 20°C.

Ainsi, dans un environnement confiné, par exemple d'une taille caractéristique inférieure à 100 $\mu$m et dans un temps court, par exemple inférieur à 5 secondes, l'agent polluant 3 peut rencontrer par diffusion les limites de l'environnement confiné avec une grande probabilité, par exemple supérieure à 95 %.

Le nombre de Péclet *Pe* (ou nombre de Péclet massique) permet de caractériser le rapport entre le transport d'un agent polluant 3 par convection et par diffusion, par exemple dans un canal microfluidique. Il peut être défini par la formule (2) :

$$Pe = \frac{L_C.v}{D} \qquad (2)$$

où $L_c$ est la longueur caractéristique, et v la vitesse d'advection de l'agent polluant 3. On considère lors de la mise en oeuvre de l'invention que la longueur caractéristique est égale à la longueur *l*', c'est-à-dire la longueur d'une zone 13 présentant des agents d'assainissement autonomes à l'intérieur d'un canal microfluidique 4 dans la direction principale de l'écoulement du fluide.

*Architecture générale du dispositif*

En référence à la figure 1, le dispositif fluidique 1 peut comprendre trois réseaux fluidiques reliés. L'entrée 4 du dispositif 1 est reliée à un réseau fluidique de distribution 6. Le réseau fluidique de distribution 6 permet de distribuer le fluide 2 à purifier à un réseau fluidique d'assainissement 8, auquel il est relié fluidiquement. Le réseau fluidique d'assainissement est un réseau tridimensionnel de canaux microfluidiques 9, non représentés dans la figure 1. La liaison fluidique entre le réseau fluidique de distribution 6 et le réseau fluidique d'assainissement 8 peut être une liaison en série, par exemple mise en oeuvre par une pluralité de sorties du réseau fluidique de distribution 6 reliées à une pluralité d'entrées du réseau fluidique d'assainissement 8 (non représenté dans la figure 1). Le réseau fluidique d'assainissement 8 est relié en aval au réseau fluidique collecteur 7, permettant de collecter le fluide 2 purifié par le réseau fluidique d'assainissement 8. La liaison fluidique entre le réseau fluidique d'assainissement 8 et le réseau fluidique collecteur 7 peut être une liaison en série, par exemple mise en oeuvre par une pluralité de sortie du réseau fluidique d'assainissement 8 reliées à une pluralité d'entrées du réseau fluidique collecteur 7 (non représenté dans la figure 1). Le réseau fluidique collecteur 7 est relié en aval à la sortie 5 du dispositif.

*Assainissement d'un agent polluant*

En référence à la figure 2, un canal microfluidique 9 est adapté à purifier un fluide 2 d'au moins un agent polluant 3. La figure 2 illustre une coupe du canal microfluidique 9. Le canal microfluidique 9 présente une hauteur h et une longueur L. Le canal microfluidique 9 est formé par une ou plusieurs parois 10 étanches au fluide 2. Lors de son introduction dans le canal microfluidique 9, un fluide 2 peut présenter des agents polluants 3 sur l'ensemble d'une section transverse 38 du canal microfluidique 9 par rapport à une direction principale d'écoulement du fluide 12 d'écoulement du fluide 2. Cet état du fluide 2 est représenté dans la partie de gauche du canal microfluidique 9 dans la figure 2.

Le canal microfluidique 9 comporte une zone 13 sur la surface intérieure dudit canal microfluidique, présentant des agents d'assainissement autonomes 11. Cette zone 13 peut par exemple correspondre à une paroi 11 présentant un agent d'assainissement autonome 11 à l'intérieur du canal microfluidique 9, illustré dans la figure 1 par un trait épais discontinu sur la paroi 10 inférieure du canal. L'agent d'assainissement autonome 11 est présent sur une longueur *l*' de la zone 13 du canal microfluidique 9. La diffusion des agents polluants 3 dans une direction transverse à la direction principale d'écoulement du fluide 12 permet, après un temps déterminé passé dans le canal, ou après une longueur traversée par l'écoulement 16, à un agent polluant 3 de rencontrer la partie de la paroi 10 sur laquelle est présenté l'agent d'assainissement autonome 11. Le tableau 1 présente le temps nécessaire à la diffusion, en particulier la diffusion latérale, de différents agents polluants 3 sur une série de distances caractéristiques déterminées.

**Tableau 1**

| Agents polluants 3 | Coefficients de diffusion D | Temps de diffusion dans l'eau à 20°C | | | |
|---|---|---|---|---|---|
| | $m^2.s^{-1}$ | 1 cm | 1 mm | 100 μm | 10 μm |
| Carbamazipine (CBZ, Tegretol) | $4.10^{-10}$ | 6,9 h | 4,2 min | 2,5 s | 0,03 s |
| Diuron | $5.10^{-10}$ | 5,6 h | 3,3 min | 2,0 s | 0,02 s |
| Chlordecone | $2.10^{-10}$ | 138,9 h | 83,3 min | 50,0 s | 0,50 s |
| Métaux lourds (limite basse) | $10^{-9}$ | 27,8 h | 16,7 min | 10,0 s | 0,10 s |
| Métaux lourds (limite haute) | $10^{-10}$ | 277,8 h | 166,7 min | 100 s | 1,00 s |

Ainsi, comme illustré dans la partie centrale de la figure 1, une partie des agents polluants 3 interagit avec les agents d'assainissement autonomes 11 présents sur la paroi. Cette interaction peut consister en une capture, comme illustré dans la figure 2, ou dans une dégradation des agents polluants 3. Une autre partie des agents polluants 3 est toujours présente dans le fluide 2. De manière générale, l'interaction des agents polluants 3 avec les agents d'assainissement autonomes 11 entraîne une déplétion d'agents polluants 3 dans le fluide 2, sans entraver l'écoulement 16. Ainsi, le fluide 2 peut être purifié des agents polluants 3 après avoir parcouru la longueur *l*' dans le canal, comme illustré

dans la partie de droite du canal microfluidique 9 dans la figure 2.

Par exemple, pour des agents polluants 3 tels que la carbamazépine, le diuron, le chlordécone et certains métaux lourds, le temps nécessaire pour interagir avec un agent d'assainissement autonome 11 est inférieur à une seconde dans un canal microfluidique 9 d'une hauteur de 10 μm. En comparaison, ce temps est de l'ordre de 100 minutes et de plusieurs centaines d'heures dans des canaux d'une hauteur respective de 1 mm et de 1 cm. La diminution quadratique de ce temps avec la hauteur du canal microfluidique 9 rend un assainissement du fluide 2 possible par diffusion.

Ainsi, l'écoulement du fluide 2 dans des canaux microfluidiques 9 confinés, dont la hauteur est inférieure à 100 μm, préférentiellement à 80 μm et préférentiellement à 60 μm, permet d'assainir le fluide 2 en tirant partie des effets de la diffusion des agents polluants 3, qui, dans les méthodes connues, n'a d'effet assainissant que dans un volume négligeable du fluide 2.

Le réseau fluidique d'assainissement 8 est un réseau tridimensionnel de canaux microfluidique 9, chaque canal microfluidique 9 présentant au moins un agent d'assainissement autonome 11 à l'intérieur du canal microfluidique 9. Ainsi, il est possible de paralléliser l'assainissement mis en oeuvre par un seul canal microfluidique 9 de manière à atteindre un débit compatible avec des applications industrielles, par exemple supérieur à 10 L/h et préférentiellement 1000 L/h, contrairement aux préjugés de l'art antérieur (Wang et al., IV. Discussion, « [it] moy not be used directly for practical water purification application »). Dans l'ensemble des réalisations de l'invention, le ou les agents d'assainissement 11 étant autonomes, aucune stimulation lumineuse (ou plus généralement aucune stimulation extérieure) n'est requise pour capturer et/ou dégrader un agent polluant 3. Ainsi, il est possible de paralléliser les canaux microfluidiques 9 dans chacune des dimensions de l'espace, quelle que soit, par exemple, l'absorption de la lumière du matériau formant les canaux microfluidiques 9.

En référence à la figure 3, une partie du réseau fluidique de distribution 6, notamment au moins un canal de distribution 40, et préférentiellement une pluralité de canaux de distribution 40, peut être relié à une partie du réseau fluidique collecteur 7, notamment au moins un canal collecteur 41 un préférentiellement un pluralité de canaux collecteurs 41, par l'intermédiaire d'une partie du réseau fluidique d'assainissement 8 mise en oeuvre par un réseau de canaux microfluidiques 9 parallèles. Un réseau de distribution comprend au moins un canal de distribution 40. Un réseau collecteur comprend au moins un canal collecteur 41. La figure 3 illustre une vue de dessus d'une partie des différents réseaux fluidiques. L'écoulement de fluide 2 à purifier est représenté par la flèche en haut à droite de la figure 3. Le fluide 2 peut ainsi être distribué dans l'ensemble des canaux microfluidiques 9 et sortir purifié dans la partie du réseau fluidique collecteur 7. De manière générale, les zones 13 sont dimensionnées, pour permettre aux agents d'assainissement autonomes une captation et/ou une dégradation d'au moins 10 %, préférentiellement d'au moins 40 %, préférentiellement d'au moins 90 % et préférentiellement de 100 % des agents polluants 3. Ce dimensionnement peut être mis en oeuvre en ajustant la longueur *l*' des zones 13 dans la direction principale de l'écoulement 12 et/ou en ajustant le nombre de parois sur laquelle ou lesquelles seront présentés les agents d'assainissement autonome 11. Par exemple, si le fluide n'est pas assez purifié en agent polluant 3 après un passage dans un dispositif d'assainissement, il est possible de choisir une longueur de zone 13 *l*' plus élevée lors de la fabrication du dispositif 1 conforme à l'invention.

En référence à la figure 4, les canaux des différents réseaux du dispositif fluidique 1 peuvent présenter des hauteurs différentes. De manière générale, la résistance hydrodynamique du ou des canaux de distribution 40 et du ou des canaux collecteurs 41 est strictement inférieure à la résistance hydrodynamique du réseau fluidique d'assainissement 8. Préférentiellement, la résistance hydrodynamique du ou des canaux de distribution 40 et du ou des canaux collecteurs 41 est négligeable devant la résistance hydrodynamique du réseau fluidique d'assainissement 8. La microfabrication de canaux présentant des hauteurs différentes peut permettre d'ajuster les différentes résistances hydrodynamiques des différents réseaux fluidiques. La figure 4 illustre une coupe de la partie des réseaux illustrés dans la figure 3. La partie du réseau fluidique de distribution 6 et la partie du réseau fluidique collecteur 7 présentent une hauteur $h_1$ supérieure à la hauteur $h_2$ présentée par un canal microfluidique 9. Ainsi, il est possible d'imposer un débit de fluide plus élevé pour entraîner un écoulement 16 qu'en utilisant un dispositif fluidique dont les résistances hydrodynamiques de chaque réseau seraient égales.

La longueur du ou des canaux de distribution 40 et/ou du ou des canaux collecteurs 41 peut être comprise entre 0,4 cm et 40 cm, préférentiellement entre 2 cm et 10 cm et préférentiellement entre 4 cm et 6 cm. La largeur du ou des canaux de distribution 40 et/ou du ou des canaux collecteurs 41 peut être comprise entre 10 μm et 1 mm, préférentiellement entre 50 μm et 200 μm et préférentiellement entre 100 μm et 150 μm. Enfin, la hauteur du ou des canaux de distribution 40 et/ou du ou des canaux collecteurs 41 peut être comprise entre 50 μm et 500 μm, préférentiellement entre 100 μm et 300 μm et préférentiellement entre 150 μm et 200 μm. La longueur des canaux microfluidiques 9 du réseau fluidique d'assainissement 8 peut être comprise entre 50 μm et 100 mm, préférentiellement entre 500 μm et 10 mm et préférentiellement entre 1 mm et 3 mm. La largeur des canaux microfluidiques 9 peut être comprise entre 10 μm et 1 mm, préférentiellement entre 50 μm et 200 μm et préférentiellement entre 100 μm et 150 μm. La hauteur des canaux microfluidiques 9 du réseau fluidique d'assainissement 8 peut être comprise entre 1 μm et 500 μm, préférentiellement entre 5 μm et 100 μm et préférentiellement entre 10 μm et 60 μm. Un canal microfluidique 9 peut présenter

plusieurs hauteurs : une paroi du canal microfluidique 9 peut par exemple présenter des reliefs en forme de chevrons.

En référence à la figure 5, les différents réseaux peuvent être formés par la mise en contact d'une face 21 d'une première couche 17 et d'une face 21 d'une deuxième couche 18, chaque couche présentant deux faces 21. La figure 5 illustre un dispositif fluidique 1, en vue de coupe, dans lequel une partie du réseau fluidique de distribution 6, une partie du réseau fluidique collecteur 7 et une partie du réseau fluidique d'assainissement 8 sont formés par la mise en contact d'une première couche 17 et d'une seconde couche 18. Une face 21 de la première couche 17 présente un motif en enfoncement configuré pour former lors du contact entre les deux couches au moins un réseau bidimensionnel de canaux microfluidiques 9, et préférentiellement une partie des différents réseaux permettant l'écoulement et l'assainissement du fluide 2.

Une première couche 17 peut par exemple être réalisée en matériau thermoplastique élastomère (par exemple en polystyrène-b-poly(éthylène-butylène)-b-polystyrène ou SEBS, en polystyrène-b-polybutadiène-b-polystyrène ou SBS, en polystyrène syndiotactique ou SPS, en Kraton, marque déposée, ou en Flexdym).

Une deuxième couche 18 peut par exemple comprendre un mélange de polymères multiphasiques d'éthylène et d'alcool vinylique (EVOH) et de polycondensat de cyclodextrine(s) (PCCD), une couche mince de polypropylène, de SEBS, de SBS, de SPS, de Kraton (marque déposée) ou Flexdym (marque déposée). Une deuxième couche 18 peut également être partiellement fonctionnalisée par des laccases fongiques.

De manière générale, une couche 17,18 peut être également réalisée en PDMS, PFPE, PMMA ou tout autre matériau connu adapté à la microfabrication de canaux microfluidiques 9.

Le dispositif fluidique 1 peut comprendre un comprenant au moins un canal primaire traversant une pluralité de couches adjacentes pour déboucher respectivement dans au moins un canal de distribution 40 et/ou au moins un canal collecteur 41 formés entre deux couches 17, 18. Des ajours alignés au travers des différentes couches adjacentes peuvent former un canal primaire 19. Il est possible de comparer un canal primaire 19 avec une structure de *via* en microélectronique par analogie entre le courant électrique et l'écoulement de fluide 2. Un canal primaire 19 peut être compris dans le réseau fluidique de distribution 6, et permettre d'acheminer le fluide 2 jusqu'à la partie du réseau fluidique de distribution 6 à l'interface d'une première couche 17 et d'une deuxième couche 18. Un canal primaire 19 peut également être compris dans le réseau fluidique collecteur 7 et permettre d'évacuer le fluide 2 purifié de la partie du réseau fluidique collecteur 7 à l'interface d'une première couche 17 et d'une deuxième couche 18. De manière générale, un canal primaire 19 peut permettre de relier fluidiquement toutes les parties du réseau fluidique de distribution 6 et/ou toutes les parties du réseau fluidique collecteur 7.

L'aire d'une section d'un canal primaire 19, normale à la direction principale de l'écoulement, peut être comprise entre 0,01 $mm^2$ et 100 $mm^2$, préférentiellement entre 0,1 $mm^2$ et 10 $mm^2$ et préférentiellement entre 0,8 $mm^2$ et 5 $mm^2$.

La figure 5 illustre également deux sections différentes de canaux microfluidiques 9 du réseau fluidique d'assainissement 8. Les sections illustrées sont des sections transverses aux directions principales d'écoulement 12 du fluide. La section du canal microfluidique 9 illustrée à gauche du réseau fluidique d'assainissement 8 est rectangulaire. Cette section correspond au canal microfluidique 9 dont la coupe est illustrée dans la figure 1. La section illustrée à droite du réseau fluidique d'assainissement 8 présente des reliefs 38 le long de son arrête supérieure. Des reliefs sur une paroi du canal microfluidique 9 présentent préférentiellement une orientation différente de la direction principale de l'écoulement 12, à l'intérieur du canal, adaptés à entraîner une convection du fluide 2 dans le canal microfluidique 9 dans une direction différente de celle de la direction principale d'écoulement 12. Ainsi, une couche de fluide 2 déplétée en agents polluants 3, par exemple proche d'une paroi 10 présentant un agent d'assainissement autonome 11, peut être remplacée par convection selon un axe transverse à l'écoulement par une couche de fluide 2 non déplétée en agents polluants 3. L'efficacité de la purification en agent polluant 3 peut ainsi être augmentée. En particulier, une paroi peut présenter des reliefs choisis parmi des stries ou des chevrons.

En référence à la figure 6, la paroi 10 d'un canal microfluidique 9 peut présenter un agent d'assainissement autonome 11 à la surface de la paroi 10.

Le panneau A de la figure 6 illustre une deuxième couche 18, permettant de former une partie des réseaux fluidiques comme illustré dans la figure 5. Le matériau de la deuxième couche 18 peut comprendre l'agent d'assainissement autonome 11 : l'agent d'assainissement autonome 11 peut être distribué dans un autre matériau lui servant de matrice, ou plus simplement être lui-même le matériau de la deuxième couche 18.

Préférentiellement, la deuxième couche 18 est fabriquée en utilisant un polycondensat de cyclodextrine(s), ou une composition comprenant au moins un polycondensat de cyclodextrine(s) obtenu par la réaction des composés (A) à (C) suivants :

(A) au moins une cyclodextrine,

(B) au moins un acide polycarboxylique, linéaire, ramifié et/ou cyclique, saturé, insaturé ou aromatique, et (C) au moins un polymère polyol thermoplastique. Le polymère polyol thermoplastique (C) est un copolymère d'éthylène et d'alcool vinylique (EVOH) et le polycondensat de cyclodextrine(s) ainsi obtenu, ou une composition comprenant au moins ce polycondensat de cyclodextrine(s), est l'agent d'assainissement autonome 11 présenté sur la surface

de la deuxième couche 18 et sur la surface d'une paroi 10.

On désigne par le terme « polycondensat » tout polymère obtenu par polymérisation par étapes, où chaque étape est une réaction de condensation, qui se fait avec une élimination d'eau. Les monomères avec deux ou plusieurs groupements fonctionnels réagissent pour former d'abord des dimères, ensuite des trimères et oligomères plus longs, et ensuite des polymères à chaîne longue. Le polycondensat de cyclodextrine(s) présente un réseau poreux qui combine des propriétés super-absorbantes de type éponge avec la capacité à former des complexes d'inclusion dans les cavités de la ou des cyclodextrines immobilisées au sein du réseau polymérique, permettant ainsi de capturer des substances ayant une affinité avec ledit réseau polymérique. Le polycondensat de cyclodextrine(s) permet de capturer par exemple des métaux ou éléments métalliques, notés M, à leur degré d'oxydation 0 (M(0)), ainsi que des substances de type médicaments et pesticides. Le polycondensat de cyclodextrine(s) peut également être obtenu par la réaction des composés (A) à (C) suivants : (A) au moins une cyclodextrine, (B) un acide polycarboxylique aliphatique saturé, linéaire ou ramifié, et (C) un copolymère d'éthylène et d'alcool vinylique (EVOH). La cyclodextrine (A) mise en oeuvre est un composé de structure générale (3) ci-après, ou l'un des dérivés de ce composé comme les dérivés méthylés, hydroxyalkylés, sulfoalkylés, sulfatés ou encore, les cyclodextrines substituées par des sucres :

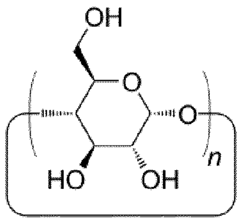

(3)

La cyclodextrine (A) peut être choisie parmi l'$\alpha$-cyclodextrine, la $\beta$-cyclodextrine et la $\gamma$-cyclodextrine. Le polycondensat de cyclodextrine est obtenu par la réaction des composés (A) à (C) ne mettant en oeuvre qu'une cyclodextrine (A). Le polycondensat de cyclodextrines peut également être obtenu par la réaction des composés (A) à (C) mettant en oeuvre un mélange de cyclodextrines (A), par exemple un mélange de deux, trois, voire plus, cyclodextrines (A). Lorsque ce mélange de cyclodextrines (A) comprend deux cyclodextrines, l'une de ces deux cyclodextrines est avantageusement la $\beta$-cyclodextrine. Un tel mélange de cyclodextrines (A) peut notamment comprendre, par rapport à la masse totale dudit mélange, les proportions massiques suivantes :

- de 10 % à 60 % de $\beta$-cyclodextrine, et
- de 40 % à 90 % d'$\alpha$-cyclodextrine ou de $\gamma$-cyclodextrine.

Dans ce mélange particulier de deux cyclodextrines (A), la proportion massique de $\beta$-cyclodextrine peut avantageusement être comprise entre 20 % à 50 % et, préférentiellement, entre 25 % à 40 % de la masse totale du mélange de cyclodextrines. Dans ce mélange particulier de deux cyclodextrines (A), la proportion massique d'$\alpha$-cyclodextrine ou de $\gamma$-cyclodextrine peut être comprise entre 50 % à 80 % et préférentiellement, entre 60 % à 75 % de la masse totale dudit mélange de cyclodextrines.

Le composé (B) mis en oeuvre peut être un acide polycarboxylique, linéaire, ramifié ou cyclique, saturé, insaturé ou aromatique. Ce ou ces acides polycarboxyliques, qui comprennent au moins deux groupes carboxyle -COOH, peuvent être linéaires, ramifiés et/ou cycliques. Ils peuvent également être saturés, insaturés ou encore aromatiques. Ce ou ces acides polycarboxyliques peuvent comprendre de 2 à 50, avantageusement de 3 à 36, préférentiellement de 4 à 18 et, plus préférentiellement encore, de 4 à 12 atomes de carbone. Le composé (B) peut par exemple être un acide polycarboxylique aliphatique saturé, linéaire ou ramifié, et/ou choisi parmi l'acide malique, l'acide citrique, l'acide aconitique, l'acide 1,2,3-propanetricarboxylique, l'acide 1,2,3,4-butanetétracarboxylique, l'acide oxydisuccinique et l'acide thiodisuccinique. Le composé (C) est un copolymère d'éthylène et d'alcool vinylique, connu sous l'abréviation EVOH. Le polycondensat de cyclodextrine(s) mis en oeuvre peut se présenter sous la forme d'un composé solide qui peut avantageusement être transformé, par exemple sous la forme de galets, de granulés, d'une poudre ou de nanotubes. S'agissant d'un composé solide, le polycondensat de cyclodextrine(s) peut également être moulé. Le polycondensat de cyclodextrine(s) peut être obtenu par la réaction des composés (A) à (C) suivants : (A) au moins une cyclodextrine, (B) au moins un acide polycarboxylique, linéaire, ramifié et/ou cyclique, saturé, insaturé ou aromatique, et (C) au moins un copolymère d'éthylène et d'alcool vinylique (EVOH). La composition peut, en outre, comprendre un ou plusieurs autres composés, ce ou ces autres composés pouvant conférer des propriétés complémentaires à celles du ou des polycondensats de cyclodextrine(s), par exemple des propriétés magnétiques. De tels composés peuvent notamment être choisis parmi du charbon actif, des peintures, des composés magnétiques et des agents antibactériens (par exemple,

des microparticules d'argent ou de cuivre). Ainsi, ce polycondensat de cyclodextrine(s) seul, ou en mélange avec un ou plusieurs autres composés dans une composition, permet de piéger une substance ou un mélange de substances au sein de sa structure, de l'immobiliser et/ou de retarder sa libération vers l'extérieur.

Le polycondensat de cyclodextrine(s) et/ou la composition comprenant un ou plusieurs polycondensats de cyclodextrine(s) peuvent être utilisés comme agent de capture d'au moins une substance choisie parmi un élément métallique et une molécule organique.

Lorsque la substance est un élément métallique, cet élément métallique M peut notamment être choisi parmi l'aluminium, l'argent, le fer, le bore, l'étain, le cuivre, le zinc, le plomb, le nickel, le cadmium, le chrome, le mercure et l'or.

Lorsque la substance est une molécule organique, cette molécule organique présente un coefficient de partage octanol/eau, noté $LogK_{ow}$ supérieur ou égal à 1,5. Le polycondensat de cyclodextrine(s) et la composition peuvent être utilisés comme agent de capture d'au moins une molécule organique présentant un $LogK_{ow}$ compris entre 1,5 et 10 et, préférentiellement, entre 5 et 8.

L'agent polluant 3 peut être une molécule organique choisie parmi un herbicide tel que le diuron, un médicament, par exemple un médicament anticonvulsivant tel que la carbamazépine, un perturbateur endocrinien tel que les polychlorobiphényles (PCB ou pyralènes), les phtalates et les hydrocarbures aromatiques polycycliques (HAP) tels que le benzopyrène, ces molécules organiques étant connues pour être particulièrement difficiles à dépolluer des milieux les contenant.

En particulier, le polycondensat de cyclodextrine(s) selon l'invention est particulièrement efficace en tant qu'agent de capture des congénères des polychlorophényles connus sous les abréviations PCB 28, PCB 52, PCB 101, PCB 118, PCB 138, PCB 153 et PCB 180.

En variante, le polycondensat peut être obtenu par la réaction dans laquelle le composé (A) est choisi parmi l'hydroxypropyl-6-cyclodextrine (HPCD), la méthyl-6-cyclodextrine (MCD) et la carboxyméthyl-6-cyclodextrine (CMCD).

Le panneau B de la figure 6 illustre une deuxième couche 18 comprenant une couche mince d'agents d'assainissement autonomes 11 formant l'une des faces 21 de la deuxième couche 18. Le matériau de la couche mince peut être similaire au matériau de la deuxième couche décrite dans le panneau A de la figure 6. On désigne également par couche mince d'agents d'assainissement autonomes 11 une couche comprenant des modifications de surface de la deuxième couche 18. Il est par exemple possible d'adsorber les agents d'assainissement autonomes 11 à la surface de la deuxième couche 18 et/ou de greffer les agents d'assainissement autonomes 11 par greffage covalent, par exemple par photo-greffage. Le matériau de la deuxième couche 18 peut être choisi par exemple parmi le polycarbonate, le polystyrène, l'EVOH, le polyéther-éther-kétone (PEEK), les thermoplastiques élastomères à base de styrène et les matériaux fluorés. Il est possible d'immobiliser des laccases fongiques comme agent d'assainissement autonome 11 sur des polymères de polypropylène ou de polyaniline. D'autres matériaux tels que le verre, le silicium, des céramiques et/ou des métaux peuvent être utilisés, permettant d'assainir un fluide 2 dans des conditions de pression et/ou de températures élevées, ou permettant d'assainir des fluides 2 en phase liquide organique.

Le panneau C de la figure 6 illustre une deuxième couche 18 comprenant une couche mince d'agents d'assainissement autonomes 11 agencée en motif à la face 21 de la deuxième couche 18. Les méthodes de déposition d'agent d'assainissement autonome 11 décrites précédemment peuvent être couplées avec des techniques telles que l'impression par microcontact, la lithographie UV ou bien encore des technologies d'impression pour réaliser les motifs.

*Parallélisation*

La parallélisation des canaux microfluidiques 9 permet d'augmenter le débit total du dispositif fluidique 1. En référence à la figure 7, le réseau fluidique d'assainissement 8 relie le réseau fluidique de distribution 6 et le réseau fluidique collecteur 7. Une pluralité de canaux microfluidiques 9 sont reliés en parallèle, par le réseau fluidique de distribution 6 et par le réseau fluidique collecteur 7, soit respectivement par une pluralité de canaux distribution 40 et par une pluralité de canaux collecteurs 41. La figure 7 illustre un réseau fluidique d'assainissement 8 comprenant des séries de canaux microfluidiques 9 parallèles agencés entre des canaux du réseau fluidique de distribution 6 et du réseau fluidique collecteur 7. Les séries de canaux microfluidiques 9 sont illustrées par les surfaces blanches. Les canaux microfluidiques 9 sont disposés parallèlement aux flèches noires indiquant le sens de l'écoulement de fluide 2. On peut typiquement disposer sur une couche 19152 canaux microfluidiques 9 de longueur L = 750 $\mu$m, de largeur W = 360 $\mu$m et de hauteur h = 10 $\mu$m.

En référence à la figure 8 et à la figure 9, une architecture radiale peut être utilisée pour agencer une partie du réseau fluidique de distribution 6, une partie du réseau fluidique collecteur 7 et une partie du réseau fluidique d'assainissement 8 à l'interface entre une première couche 17 et une deuxième couche 18. Le réseau fluidique de distribution 6 peut comprendre un canal primaire 19. Le canal primaire 19 permet de relier fluidiquement l'entrée 4 du dispositif fluidique 1 à une partie d'un réseau fluidique de distribution 6 agencée sur une première couche 17. Le canal primaire 19 peut être fabriqué par micro-usinage, par exemple par une fraiseuse, par un laser, par un procédé de gravure humide et/ou de gravure sèche (particulièrement pour une première couche 17 et/ou une deuxième couche 18 en silicium ou

en verre), par lithographie à chaud (particulièrement pour une première couche 17 et/ou une deuxième couche 18 en copolymères tri blocs de type styrène-éthylène styrène). Il est également possible de fabriquer un canal primaire 19 par impression 3D.

En référence à la figure 10, une architecture radiale peut être utilisée pour agencer une partie du réseau fluidique de distribution 6, une partie du réseau fluidique collecteur 7 et une partie du réseau fluidique d'assainissement 8 à l'interface entre une première couche 17 et une deuxième couche 18. La figure 10 illustre la mise en oeuvre d'une telle architecture sur une première couche 17 ou sur une deuxième couche 18. La partie du réseau fluidique de distribution 6 agencée sur la couche est reliée en amont à 9 canaux primaires 19. La partie du réseau fluidique collecteur 7 est reliée en aval à 6 canaux primaires 19.

La surface occupée, dans la projection sur le plan principal de l'interface entre deux couches superposées, par le ou les canaux de distribution 40 et par le ou les canaux collecteurs 41 sur la face d'une couche est avantageusement comprise entre 20 % et 45 % de la surface totale de ladite face, préférentiellement entre 6 % et 25 % de la surface totale de ladite face et préférentiellement entre 13 % et 17 % de la surface totale de ladite face.

La surface occupée, dans la projection sur le plan principal de l'interface entre deux couches superposées, par le ou les canaux microfluidiques 9 sur la face d'une couche est avantageusement comprise entre 20 % et 70 % de la surface totale de ladite face et préférentiellement entre 40 % et 50 % de la surface totale de ladite face.

Ainsi, l'agencement du réseau fluidique de distribution 6, du réseau fluidique collecteur 7 et du réseau fluidique d'assainissement 8 est optimisé pour satisfaire deux critères : d'une part, minimiser le rapport entre la résistance hydrodynamique du réseau fluidique de distribution 6 et du réseau fluidique collecteur 7 par rapport à la résistance hydrodynamique du réseau fluidique d'assainissement 8, et d'autre part maximiser la densité de surface occupée par le réseau fluidique d'assainissement 8 sur un couche.

En référence à la figure 11, la parallélisation des canaux microfluidiques 9 peut être mise en oeuvre en superposant des réseaux bidimensionnels de canaux microfluidiques 9, le réseau fluidique d'assainissement 8 reliant les canaux de distribution 40 et les canaux collecteurs 41. On peut empiler des sous-empilements formés d'une première couche 17 et d'une deuxième couche 18. La figure 11 illustre un empilement 14 comprenant une superposition alternative de premières couches 17 et de deuxièmes couches 18. L'empilement 14 et le collage sont réalisés sur la face 21 des couches. Le collage ou scellage des différentes couches peut être réalisé par le traitement des faces 21 des couches au plasma, par exemple au plasma d'oxygène. Il est également possible, lorsque le matériau de chacune des couches présente une température de transition vitreuse inférieure à 0°C, de coller deux couches uniquement par la mise en contact des deux couches à une température comprise entre 0°C et 50° C. Lors du collage des couches par mise en contact, le matériau des couches présente préférentiellement un module de Young inférieur à 10 MPa : ainsi, la face 21 d'une couche est assez déformable pour rentrer en contact avec la face 21 d'une autre couche malgré les irrégularités potentielles présentes sur les faces 21. Le matériau Flexdym (marque déposée) permet ce type de collage à température ambiante entre deux couches. Ainsi, il est possible de coller ou sceller différentes couches d'un empilement 14 sans conditionner l'empilement 14 à des températures entraînant la dénaturation d'espèces biologiques utilisées comme agents d'assainissement autonomes 11. Les enzymes, en particulier les laccases fongiques, lorsqu'elles sont utilisées comme agent d'assainissement autonome 11, peuvent être présentées à la paroi 10 d'un canal microfluidique 9 sans être dénaturées par une étape de fabrication préalable.

L'épaisseur des premières couches 17 peut être comprise entre 0,05 mm et 1 cm, préférentiellement entre 0,5 mm et 2 mm et préférentiellement entre 1 mm et 1,5 mm.

Les canaux primaires 19 permettent, dans le cas d'un empilement 14 de plusieurs premières couches 17 et de plusieurs deuxièmes couches 18 de distribuer ou de collecter le fluide 2 dans les canaux présents à chaque interface entre une première couche 17 et une deuxième couche 18. Les traits en pointillés illustrent des canaux à l'interface des deux couches 17, 18 permettant de relier les canaux primaires 19 aux autres canaux à l'interface.

En référence à la figure 12, les deux faces 21 d'une même deuxième couche 18 peuvent être utilisées pour former des réseaux fluidiques en mettant en contact de part et d'autre de la deuxième couche 18 des premières couches 17 présentant sur la face 21 mise en contact un motif en enfoncement. On peut ainsi former un sous-empilement, formé consécutivement d'une première couche 17, d'une deuxième couche 18 et d'une première couche 17. Ainsi, si la deuxième couche 18 présente des propriétés d'assainissement sur ses deux faces 21, comme c'est le cas pour d'une deuxième couche 18 fabriquée en PCCD/EVOH, on minimise le nombre de deuxièmes couches 18 utilisées dans un empilement 14 pour un réseau fluidique de même taille. Il est possible d'utiliser des matériaux copolymères blocs dont une température de transition vitreuse est inférieure à 0°C comme décrit précédemment, de manière à sceller deux couches, par exemple une première couche 17 et une deuxième couche 18, à température ambiante, sans étape de traitement supplémentaire que la mise en contact des différentes couches.

De manière générale, au moins trois couches sont empilées, au moins deux faces d'une ou plusieurs couches présentant, en regard d'au moins deux couches, un motif en enfoncement configuré pour former au moins deux réseaux bidimensionnels de canaux microfluidiques lorsque les au moins trois couches sont empilées. Ainsi, il est possible de paralléliser les réseaux bidimensionnels de canaux microfluidiques 9 formés entre deux couches de manière à former

un réseau tridimensionnel de canaux microfluidiques 9. Ainsi, le degré de parallélisation élevé des canaux microfluidiques 9 permet de diminuer la résistance hydrodynamique du réseau fluidique d'assainissement 8 et ainsi de faire circuler le fluide 2 en commandant ou en contrôlant au système et/ou au réseau d'assainissement 8 une variation de pression entre l'entrée et la sortie inférieure à 5 bars, et préférentiellement inférieure à 1 bar.

En référence à la figure 13, un empilement 14 de couches peut comprendre un connecteur de distribution 22 et un connecteur de collection 23 aux extrémités de l'empilement 14. Ces collecteurs peuvent présenter des motifs en enfoncement, des canaux et/ou des ajours permettant de relier une connectique 24 d'entrée ou de sortie du dispositif fluidique 1 aux canaux primaires 19 du dispositif fluidique 1. La figure 13 illustre un empilement 14 comprenant une succession de premières couches 17 et de deuxièmes couches 18 alternées, comprises entre un connecteur de distribution 22 et un connecteur de collection 23. Dans l'empilement 14, les différentes couches et les connecteurs sont en contact : la figure 13 est une vue éclatée du dispositif fluidique 1.

En référence à la figure 14, le connecteur de distribution 22 peut être adapté à former des canaux reliant une connectique fluidique 24 d'entrée à différents circuits primaires 19. La figure 14 illustre une vue de dessus d'un connecteur de distribution 22. Une entrée du connecteur de distribution 223 peut être adaptée à être reliée à un connecteur fluidique 24 (non représenté). La mise en contact du connecteur de distribution 22 avec une couche peut permettre de former des canaux fluidiques, dont des canaux de première génération 221, reliés fluidiquement à l'entrée du connecteur de distribution 223. La figure 14 illustre un motif adapté à former 4 canaux de première génération 221. Préférentiellement, le dispositif fluidique 1 comprend entre 2 et 50 canaux de première génération 221, préférentiellement entre 3 et 25 canaux de première génération et préférentiellement entre 4 et 10 canaux de première génération. Chacun des canaux de première génération 221 peut être relié à des canaux de seconde génération 222, reliant les canaux de première génération 221 aux sorties du connecteur de distribution 224. Chaque sortie du connecteur de distribution 224 est adaptée à être reliée à un canal primaire 19. Le connecteur de distribution 22 peut également comprendre deux couches formant les différents canaux reliant l'entrée du connecteur de distribution 223 aux sorties du connecteur de distribution 224. Le connecteur de distribution 22 peut être scellé ou collé à une couche par l'une des méthodes décrites précédemment. Il peut également être collé à une couche en utilisant du ruban adhésif double face.

En référence à la figure 15, le connecteur de collection 23 peut être adapté à former des canaux reliant une connectique fluidique 24 de sortie à différents circuits primaires 19. La figure 15 illustre une vue de dessus d'un connecteur de collection 23. Une sortie du connecteur de distribution 233 peut être adaptée à être reliée à un connecteur fluidique 24 (non représenté). La mise en contact du connecteur de collection 23 avec une couche peut permettre de former des canaux fluidiques, dont des canaux de première génération 231, reliés fluidiquement à la sortie du connecteur de distribution 233. La figure 14 illustre un motif adapté à former 4 canaux de première génération 231. Préférentiellement, le dispositif fluidique 1 comprend entre 2 et 50 canaux de première génération 231, préférentiellement entre 3 et 25 canaux de première génération 231 et préférentiellement entre 4 et 10 canaux de première génération 231. Chaque canal de première génération 231 peut être relié à des canaux de seconde génération 232, reliant les canaux de première génération 231 aux entrées du connecteur de collection 234. Chaque entrée du connecteur de collection 234 est adaptée à être reliée à un canal primaire 19. Le connecteur de collection 23 peut également comprendre deux couches formant les différents canaux reliant la sortie du connecteur de collection 233 aux entrées du connecteur de collection 234. Le connecteur de collection 23 peut être scellé ou collé à une couche par l'une des méthodes décrites précédemment pour sceller les couches entre elles. Il peut également être collé à une couche en utilisant du ruban adhésif double face.

Les connecteurs de distribution 22 et de collection 23 peuvent être en polydiméthylsiloxane (PDMS) et réalisés par lithographie douce. Ils peuvent être également fabriqués en thermoplastiques élastomères et structurés par lithographie d'impression à chaud, par moulage par injection, par impression 3D, ou par stéréolithographie. Des matériaux tels que le polystyrène, le polycarbonate, le polyimide ou d'autres matériaux thermoplastiques élastomères tels que les matériaux polyuréthane ou blockamide peuvent également être utilisés. Les connecteurs de distribution 22 et de collection 23 peuvent également être fabriqués en silicium, en verre ou en matériau métallique (par exemple en Ni, alliage NiCo, aluminium, acier inoxydable) : ainsi, le dispositif fluidique 1 peut résister mécaniquement et chimiquement à un écoulement de fluide 2 organique. Le connecteur de distribution 22 et de collection 23 peuvent être fabriqués, en utilisant ces matériaux, par impression 3D, par micro-usinage, par électrodéposition, par gravures humide et/ou par gravure ionique réactive.

*Lavage et régénération du dispositif fluidique 1*

Des fluides de lavage et/ou de régénération des agents d'assainissement autonomes peuvent être introduits dans le dispositif fluidique 1. On entend par fluide de lavage un fluide permettant d'emporter les impuretés bloquées dans un dispositif fluidique 1. On entend par fluide de régénération un fluide permettant le relargage des agents polluants 3 capturés par les agents d'assainissement autonomes 11, ou encore permettant aux agents d'assainissement autonomes 11 de dégrader les agents polluants 3 avec une efficacité sensiblement égale à la sensibilité au temps initial auquel on introduit le fluide 2 dans le dispositif fluidique 1. Une combinaison de fluides de nettoyage et de régénération

peut être introduite dans le dispositif fluidique 1, par exemple à un débit compris entre 0,01 µL/min et 250 L/min, préférentiellement entre 1 µL/min et 2 L/min, et préférentiellement entre 0,7 mL/min et 3 mL/min. Un écoulement de fluide de lavage et/ou de régénération peut être couplé à un conditionnement thermique. On peut par exemple conditionner la température du fluide 2 avant de l'introduire dans un dispositif fluidique 1. La circulation de fluide de lavage et/ou de régénération peut être discontinue, ouverte ou en boucle fermée. On peut utiliser une solution d'acide citrique à 5% comme solution de lavage et de régénération. On peut également utiliser un plasma oxydant de Oz. Ce plasma peut circuler, en boucle fermée, à un débit compris entre 0,1 µL/min et 0,5 µL/min.

Les fluides de lavage et/ou de régénération peuvent être mis en recirculation dans le même sens ou dans le sens opposé à la circulation du fluide 2. En outre, la circulation et/ou la recirculation du fluide de lavage et/ou de régénération peuvent être pulsées, c'est-à-dire que le débit est périodique et variable, par exemple en créneaux.

*Architecture générale d'un système d'assainissement*

La figure 16 illustre de manière schématique l'architecture générale d'un système d'assainissement. Le système comprend un bâti 28, lequel comprend au moins un dispositif fluidique 1. Le bâti peut comprendre une source 25 de rayonnement ultrasonore. Le bâti peut être fabriqué en matériau polymère ou métallique, permettant d'utiliser le système à des températures élevées, par exemple comprises entre 50°C et 250°C, et/ou de bloquer le rayonnement émis par la source 25 de rayonnement vers l'extérieur du bâti 28. La source 25 permet d'assainir le fluide 2 traversant le dispositif fluidique 1 en complément et de manière distincte de l'assainissement par diffusion/convection.

Un dispositif de conditionnement de la température 27 est adapté à conditionner la température à l'intérieur du bâti 28. Un autre dispositif de conditionnement de la température 27 peut être adapté à conditionner la température du dispositif fluidique 1. Les températures du bâti et/ou du dispositif fluidique 1 peuvent être ajustées par les dispositifs de conditionnement de la température entre 20°C et 250°C. Les dispositifs de conditionnement de la température peuvent par exemple comprendre des capteurs de température permettant de maintenir une température de consigne par un contrôle en boucle fermée de la température. Ainsi, il est possible d'ajuster l'efficacité de la purification du fluide 2 passant par le dispositif fluidique 1 : selon l'équation de Stokes-Einstein, la constante de diffusion d'un agent polluant 3 évolue linéairement avec la température. Une augmentation de la température permet ainsi d'augmenter la vitesse à laquelle un agent polluant 3 est susceptible de rencontrer une paroi présentant un agent d'assainissement autonome 11.

Une pompe 30 permet de contrôler l'écoulement 16 de fluide 2 dans le système d'assainissement. La pompe 30 est adaptée à entraîner un débit de fluide dans le système d'assainissement compris entre 0,01 $\mu L.min^{-1}$ et 2500 $L.min^{-1}$.

Un contrôleur de pression 31 peut commander une pression à l'intérieur du bâti 28, dont la valeur absolue est inférieure à 5 bars et préférentiellement inférieure à 1 bar. Un contrôleur de pression peut également être adapté commander un débit de fluide par différence de pression dans le dispositif fluidique 1. La différence de pression entre l'entré est la sortie peut être négative pour attirer le fluide 2 vers la sortie ou positive pour pousser le fluide 2 vers la sortie.

Une première unité de détection fluidique 32 peut être reliée fluidiquement en aval du dispositif fluidique 1. L'unité de détection fluidique 32 peut mesurer la concentration en agent polluant 3 du fluide 2 en sortie du dispositif fluidique 1.

Une deuxième unité de détection fluidique 33 peut être reliée fluidiquement en aval du dispositif fluidique 1. La deuxième unité de détection fluidique 33 permet d'analyser spécifiquement les liquides de lavages et/ou de régénération.

Un premier collecteur de sortie 34 et un deuxième collecteur de sortie 35 sont reliés fluidiquement au dispositif fluidique 1. Le premier collecteur de sortie 34 permet de collecter le fluide 2 assaini ou partiellement assaini par le dispositif fluidique 1. Le second collecteur permet 35 permet de collecter le fluide régénérateur ou le fluide de lavage en aval du dispositif fluidique 1. Les fluides peuvent être sélectivement transportés vers l'un ou l'autre des collecteurs par exemple à l'aide d'une vanne contrôlée par une unité de contrôle 26.

Une unité de collecte des fluides régénérants et/ou des fluides de lavage 37 est reliée au deuxième collecteur de sortie 35.

Une unité de contrôle 26 est reliée électriquement à la pompe 30, au contrôleur de pression 31, à la valve de sélection 38, aux dispositifs de conditionnement de la température 27, aux premiers et deuxièmes collecteurs de sortie 34 et 35. L'unité de contrôle peut être un ordinateur comprenant un microprocesseur et une mémoire. Les communications de données entre l'unité centrale et les autres composants d'un système d'assainissement peuvent être mises en oeuvre par une ou des liaisons sans fil. Les différents collecteurs et/ou les valves peuvent être adaptés à rediriger les différents fluides en amont du dispositif fluidique 1 pour permettre une recirculation du fluide 2.

Les unités de détections 32,33 peuvent comprendre des capteurs, microsystèmes ou laboratoires sur puce pour mettre en oeuvre différentes analyses des fluides en aval du dispositif fluidique 1, et transmettre ces analyses à l'unité de contrôle. Ces données permettent un contrôle en boucle fermée des recirculations dans le système d'assainissement. Les unités de contrôle peuvent également comprendre des capteurs de turbidité des fluides et/ou des

spectromètres UV. De manière plus générale, le système est adapté à assainir le fluide 2 en mettant en oeuvre au moins une recirculation du fluide 2 dans le réseau de canaux microfluidiques.

Les différentes flèches illustrent des écoulements possibles des fluides dans le système, les liaisons en traits continus illustrent des liaisons fluidiques dans le système, les traits pointillés illustrent des liaisons permettant un transfert thermique et les traits gris illustrent un réseau permettant de contrôler en pression les extrémités du réseau.

En référence à la figure 17, un ensemble d'assainissement peut comprendre plusieurs dispositifs fluidiques 1. Les différents dispositifs fluidiques 1 peuvent être agencés en parallèle, comme illustré dans la figure 17. Ainsi, un ensemble d'assainissement peut traiter un fluide 2 à un débit plus élevé qu'un système comprenant un seul dispositif fluidique 1 tel que décrit dans la figure 16. Dans une autre configuration, différents dispositifs fluidiques 1 peuvent être reliés en série. Ainsi, un fluide 2 introduit dans le système peut être purifié d'un agent polluant 3 plus efficacement et sans réaliser de recirculation du fluide 2 dans le même dispositif fluidique 1. Une mise en série des différents dispositifs fluidiques 1 permet également de purifier le fluide 2 de plusieurs agents polluants 3. Un premier dispositif fluidique 1 comprenant un premier agent d'assainissement autonome 11 peut par exemple être relié en série à un deuxième dispositif fluidique 1 comprenant un deuxième agent d'assainissement autonome 11, permettant de former un système adapté à traiter deux agents polluants 3. Une série de dispositifs fluidiques 1 peut comprendre entre 2 et 20 dispositifs fluidiques 1, préférentiellement entre 3 et 10 dispositifs fluidiques 1.

La figure 17 illustre schématiquement un système comprenant 12 dispositifs fluidiques 1 reliés fluidiquement en parallèle. Un fluide 2 partiellement pollué peut être introduit en entrée du système 39. Un réseau de connectiques fluidiques relie l'entrée 39 du système à chacune des entrées 4 des dispositifs fluidiques 1. Le fluide 2 purifié peut être collecté en sortie 5 des dispositifs fluidiques 1. Un réseau de connectiques fluidiques permet de relier chacune des sorties 5 des dispositifs fluidiques 1 à la sortie 39 du système d'assainissement. Le système d'assainissement peut comprendre entre 1 et 200 dispositifs fluidiques 1, préférentiellement entre 8 et 50 dispositifs fluidiques 1 et préférentiellement entre 12 et 20 dispositifs fluidiques 1. Ainsi, un fluide 2 peut être dépollué ou purifié d'un agent polluant 3 en utilisant un dispositif comprenant un petit volume de remplissage au regard des dispositifs connus. Par exemple, un bâti 28 standard de 50 L peut comprendre 30 dispositifs fluidiques 1, chaque dispositif fluidique 1 comprenant un empilement 14 de 500 premières couches 17 et deuxièmes couches 18 superposées alternativement, tel que décrit en figure 10. Le volume total de fluide 2 qui peut être compris dans un tel système d'assainissement est sensiblement de 2 L. Un tel système permet de purifier un fluide 2 à un débit de 150 $L.min^{-1}$ soit 200 000 $L.jour^{-1}$, en appliquant une différence de pression sensiblement égale à 0,1 bar entre l'entrée 39 et la sortie 40 du système. De manière générale, le débit d'un système d'assainissement comprenant des dispositifs multiplexés peut atteindre 10 000 $m^3.jour^{-1}$, soit sensiblement 417 000 L/h. De tels systèmes d'assainissement peuvent être portables et autonomes en énergie électrique, et sont ainsi adaptés à être employés dans des environnement isolés. De plus, de tels systèmes peuvent être adaptés à assainir des effluents industriels, par exemple à des débits compris entre 25 et 2500 $L.min^{-1}$.

En référence à la figure 18, le procédé d'assainissement d'un fluide 2 peut comprendre plusieurs étapes.

Lors d'une étape 181, on fait passer un fluide 2 dans un réseau de canaux microfluidiques 9 à un débit du fluide à purifier. La vitesse de l'écoulement de fluide 2 ou son débit peuvent être contrôlés par une pompe 30 ou par un contrôleur de pression 31, et choisie pour permettre aux agents d'assainissement autonomes 11 une capture et/ou une dégradation d'au moins 10 %, préférentiellement d'au moins 40 % et préférentiellement d'au moins 90 % et préférentiellement de 100 % des agents polluants 3, au débit de l'écoulement. La proportion d'agents polluants 3 peut être mesurée par la première unité de détection 32 en aval du dispositif 1. La formule (2) permet de calculer le nombre de Péclet *Pe* correspondant à un agent polluant 3 dans l'écoulement. Le coefficient de diffusion D et la longueur /' sont des valeurs connues. La valeur du débit peut être calculée en fonction de la géométrie des différents canaux du système et en fonction de la pression appliquée au système. Ainsi, on commande lors d'une étape 181 un écoulement de fluide 2 dans lequel *Pe* est inférieur à $10^4$, préférentiellement inférieur à 10 et préférentiellement inférieur à 1. La vitesse de l'écoulement de fluide 2 peut également être choisie de manière à ce que le nombre de Péclet de l'agent polluant 3 dans le fluide 2 est compris entre $10^{-2}$ et $10^4$, préférentiellement compris entre $10^{-1}$ et $10^3$ et préférentiellement compris entre 1 et $10^2$ et : ainsi la diffusion peut permettre aux agents polluants 3 d'un fluide 2 d'être partiellement ou totalement captés ou dégradés par un ou plusieurs agents d'assainissement autonomes 11, tout en correspondant à un débit suffisant pour des applications industrielles du procédé d'assainissement. Pour purifier un fluide 2 avec un même taux d'abattement en agent polluant 3, il est possible de faire circuler le fluide dans le dispositif fluidique 1 une seule fois à bas nombre de Péclet de l'agent polluant 3, par exemple inférieur à 10 et préférentiellement inférieur à 1, ou de mettre en oeuvre des recirculations du fluide 2 à débit plus élevé et donc à un nombre de Péclet de l'agent polluant 3 plus élevé, inférieur à 10000 et préférentiellement inférieur à 1000, et plus préférentiellement inférieur à 1000.

Lors d'une étape 182, on commande le lavage ou la régénération des canaux microfluidiques, comme décrit précédemment. Cette étape peut être suivie d'une étape 181. Ainsi, il est possible de purifier un volume de fluide 2 élevé, en interrompant l'écoulement de fluide 2 par un lavage ou une régénération des agents d'assainissement autonomes 11.

Lors d'une étape 183, on fait recirculer le fluide 2. L'étape 183 peut être réalisée en parallèle de l'étape 181.

La recirculation peut être mise en oeuvre en faisant recirculer le fluide 2 dans le même sens que lors de la première circulation du fluide 2, ou dans le sens opposé. En outre, la circulation et/ou la recirculation du fluide 2 peuvent être pulsées, c'est-à-dire que le débit n'est pas constant et est périodique. Une recirculation pulsée peut permettre d'optimiser l'interaction entre un agent polluant 3 et un agent d'assainissement autonome 11.

*Eléments généraux de microfabrication*

La fabrication des canaux microfluidiques 9, et de manière plus générale, des canaux du réseau fluidique de distribution 6, du réseau fluidique collecteur 7 et du réseau fluidique d'assainissement 8, peut être mise en œuvre suivant des techniques de microfabrication utilisant par exemple un substrat en silicium, en verre, mais aussi en matériau polymère mince, épais, rigide ou flexible. Un substrat peut être moulé, gravé ou micro-usiné. Un substrat mécaniquement robuste peut présenter des éléments microfluidiques 2D et 3D. Les canaux des différents réseaux fluidiques peuvent également être réalisés par un procédé de microfabrication lithographique à bas coût par impression à chaud. Il est par exemple possible de mettre en oeuvre le thermomoulage d'un CD en matériau thermoplastique élastomère (similaire à un CD audio/vidéo en plastique) de manière à fabriquer une pluralité de microcanaux interconnectés, une pluralité de réservoirs fluidiques interconnectés et d'autres unités de dosage et de mélange.

*Exemples de purifications*

La purification d'eau préalablement polluée par un système d'assainissement comprenant un dispositif fluidique 1 d'assainissement a été mise en oeuvre.
Des écoulements 16 d'eau préalablement polluée par divers agents polluants 3 ont été commandés dans un dispositif fluidique 1 comprenant un empilement 14 de 23 sous-empilements comprenant une première couche 17 et une seconde couche 18. Une différence de pression de 175 Pa commandée entre l'entrée et la sortie du système d'assainissement permet d'entraîner un débit en fluide 2 de 2,3 $L.min^{-1}$. Les premières couches 17 en thermoplastique élastomère (Flexdym, marque déposée) présentent une épaisseur de 1,3 mm et des structures en enfoncement réalisées par lithographie par impression sur l'une de leurs faces 21, en utilisant un moule microstructuré de résine de type epoxy. Les deuxièmes couches 18 d'assainissement présentent une épaisseur de 0,5 mm. Le matériau des deuxièmes couches 18 est un mélange EVOH/PCCD, la concentration massique en PCCD étant sensiblement égale à 38%. Les deuxièmes couches 18 sont fabriquées au préalable par un procédé d'extrusion. La hauteur des canaux microfluidiques 9 est de 10 $\mu$m.
Le tableau 2 présente l'évolution du taux d'abattement en agent polluant 3 avec le débit de fluide 2 commandé dans le système d'assainissement. De l'eau polluée par du plomb à une concentration massique de 0,1 $\mu g.L^{-1}$ est initialement introduite dans le système d'assainissement. L'assainissement est réalisé à température ambiante (20°C), à un débit commandé continu, sans lavage du système et sans relargage des agents polluants 3 par les agents d'assainissement autonome 11.

**Tableau 2**

| Débit | 50 $L.min^{-1}$ | 20 $L.min^{-1}$ | 5 $L.min^{-1}$ | 1 $L.min^{-1}$ |
|---|---|---|---|---|
| Taux d'abattement | 30 % | 62 % | 85 % | 93 % |

Le tableau 3 présente l'évolution du taux d'abattement en agent polluant 3 avec le débit de fluide 2 commandé dans le système d'assainissement. De l'eau polluée par de la carbamazépine à une concentration massique de 0,1 $\mu g.L^{-1}$ est initialement introduite dans le système d'assainissement. L'assainissement est réalisé à température ambiante (20°C), à un débit commandé continu, sans lavage du système et sans relargage des agents polluants 3 par les agents d'assainissement autonomes 11.

**Tableau 3**

| Débit | 50 $L.min^{-1}$ | 20 $L.min^{-1}$ | 5 $L.min^{-1}$ | 1 $L.min^{-1}$ |
|---|---|---|---|---|
| Taux d'abattement | 14% | 31 % | 56 % | 87 % |

## Revendications

1. Dispositif fluidique (1) d'assainissement adapté à purifier un fluide (2) d'un agent polluant (3), comprenant un réseau

fluidique d'assainissement (8), **caractérisé en ce que** le réseau fluidique d'assainissement est un réseau tridimensionnel de canaux microfluidiques (9), chaque canal microfluidique (9) étant défini par une ou plusieurs parois étanches au fluide (2), chaque canal microfluidique (9) comportant au moins une zone (13) sur la surface intérieure dudit canal microfluidique (9) présentant un agent d'assainissement autonome (11) et chaque canal microfluidique (9) présentant au niveau d'une telle zone (13) une hauteur inférieure à 60 $\mu$m dans une direction normale à la direction principale d'écoulement (12) du fluide, l'agent d'assainissement autonome (11) étant choisi:

-- parmi une cyclodextrine, un charbon actif, un calixarène, de l'alumine activée, un gel de silice, du graphite, une argile et une zéolithe de sorte que l'agent d'assainissement autonome (11) est configuré pour capturer l'agent polluant (3), ou
-- parmi une laccase, une peroxydase de raifort, une lignine peroxydase, une manganèse péroxydase, une tyrosinase, du permanganate de potassium, un persulfate et une enzyme fongique de sorte que l'agent d'assainissement autonome (11) est configuré pour dégrader l'agent polluant (3),
l'agent d'assainissement autonome et le dimensionnement desdites zones (13) étant configurés pour permettre une capture et/ou une dégradation d'au moins 10 % de l'agent polluant (3) par lesdites zones, pour au moins un débit du fluide à purifier, le dispositif comprenant une pluralité de canaux de distribution (40) et une pluralité de canaux collecteurs (41), le réseau fluidique d'assainissement (8) reliant les canaux de distribution et les canaux collecteurs et étant mis en oeuvre au moins par un réseau de canaux microfluidiques (9) reliés en parallèle,
au moins une paroi d'un canal microfluidique (9) présentant une pluralité de reliefs (38) s'étendant selon au moins une direction différente de la direction principale d'écoulement (12) du fluide,
le dispositif fluidique étant configuré pour que, lorsque la valeur absolue de la différence de pression est inférieure à 5 bar, la résistance hydrodynamique du ou des canaux de distribution et du ou des canaux collecteurs est strictement inférieure à la résistance hydrodynamique du réseau fluidique d'assainissement.

**2.** Dispositif fluidique (1) selon la revendication 1, dans lequel le réseau tridimensionnel de canaux microfluidiques (9) comprend une superposition de réseaux bidimensionnels de canaux microfluidiques (9), le réseau fluidique d'assainissement (8) reliant les canaux de distribution (40) et les canaux collecteurs (41).

**3.** Dispositif selon la revendication 1, comprenant au moins trois couches (17, 18) empilées, au moins deux faces d'une ou plusieurs couches présentant, en regard d'au moins deux couches, un motif en enfoncement configuré pour former au moins deux réseaux bidimensionnels de canaux microfluidiques (9) lorsque les au moins trois couches sont empilées.

**4.** Dispositif selon la revendication 1 à 3, comprenant au moins trois couches (17, 18) empilées, au moins deux faces d'une ou plusieurs couches présentant, en regard d'au moins deux couches, un motif en enfoncement configuré pour former au moins deux réseaux bidimensionnels de canaux microfluidiques (9) lorsque les au moins trois couches sont empilées, dans lequel un dit motif est configuré pour former au moins en partie un ou plusieurs canaux de distribution (40), et au moins en partie un ou plusieurs canaux collecteurs (41).

**5.** Dispositif selon l'une des revendications 3 ou 4, comprenant au moins un canal primaire (19) traversant une pluralité de couches (17, 18) adjacentes pour déboucher respectivement dans au moins un canal de distribution (40) et/ou au moins un canal collecteur (41) formés entre deux couches (17, 18).

**6.** Dispositif selon l'une des revendications 3 à 5, dans lequel l'empilement (14) comprend une superposition de sous-empilements chacun formés de deux couches (17,18), lesdites deux couches étant dans des matériaux différents.

**7.** Dispositif selon l'une des revendications 3 à 5, dans lequel l'empilement (14) comprend une superposition de sous-empilements chacun formé de trois couches (17, 18) consécutives, les deux couches de part et d'autre du sous-empilement étant dans le même matériau.

**8.** Dispositif selon l'une des revendications 3 à 7 dans lequel le matériau d'une couche (17, 18) comprend un polycondensat de cyclodextrines.

**9.** Dispositif selon l'une des revendications 3 à 8 dans lequel le matériau d'au moins deux couches (17, 18) en contact comprend un copolymère bloc, le copolymère bloc présentant une température de transition vitreuse inférieure à 0°C et le matériau présentant un module de Young inférieur à 10 MPa.

**10.** Dispositif selon l'une des revendications 3 à 9 dans lequel le matériau d'une couche (17, 18) comprend un élastomère thermoplastique styrénique.

**11.** Dispositif selon l'une des revendications 1 à 10, dans lequel l'agent d'assainissement autonome (11) est adapté à capturer l'agent polluant (3) et est au moins choisi parmi une cyclodextrine, un charbon actif, un calixarène, de l'alumine activée, un gel de silice, du graphite, une argile et une zéolithe.

**12.** Dispositif selon l'une des revendications 1 à 11, dans lequel l'agent d'assainissement autonome (11) est adapté à dégrader l'agent polluant (3) et est au moins choisi parmi une laccase, une peroxydase de raifort, une lignine peroxydase, une manganèse péroxydase, une tyrosinase, du permanganate de potassium, un persulfate et une enzyme fongique.

**13.** Procédé d'assainissement adapté à purifier un fluide (2) d'un agent polluant (3), comprenant une étape dans laquelle on fait passer le fluide (2) dans un réseau fluidique d'assainissement (8) tridimensionnel de canaux microfluidiques (9) à un débit du fluide à purifier, chaque canal microfluidique (9) comportant au moins une zone (13) sur la surface intérieure dudit canal microfluidique (9) présentant un agent d'assainissement autonome (11) et chaque canal microfluidique (9) présentant au niveau d'une telle zone (13) une hauteur inférieure à 60 $\mu$m dans une direction normale à la direction principale d'écoulement (12) du fluide, l'agent d'assainissement autonome (11) étant choisi:

-- parmi une cyclodextrine, un charbon actif, un calixarène, de l'alumine activée, un gel de silice, du graphite, une argile et une zéolithe de sorte que l'agent d'assainissement autonome (11) est configuré pour capturer l'agent polluant (3), ou
-- parmi une laccase, une peroxydase de raifort, une lignine peroxydase, une manganèse péroxydase, une tyrosinase, du permanganate de potassium, un persulfate et une enzyme fongique de sorte que l'agent d'assainissement autonome (11) est configuré pour dégrader l'agent polluant (3),

l'agent d'assainissement autonome et le dimensionnement desdites zones (13) étant configurés pour permettre (11) une capture et/ou une dégradation d'au moins 10 % de l'agent polluant (3) par lesdites zones lors de l'écoulement du fluide (2) audit débit dans le réseau de canaux microfluidiques (9), comprenant la commande d'une différence de pression entre l'entrée (4) et la sortie (5) d'un dispositif (1) de manière à entraîner ledit débit de fluide (2) dans ledit dispositif (1), le dispositif (2) comprenant une pluralité de canaux de distribution (40) reliée à l'entrée (4) et une pluralité de canaux collecteurs (41) reliée à la sortie (5), le réseau fluidique d'assainissement (8) reliant les canaux de distribution et les canaux collecteurs, la résistance hydrodynamique du ou des canaux de distribution et du ou des canaux collecteurs étant strictement inférieure à la résistance hydrodynamique du réseau fluidique d'assainissement et la valeur absolue de la différence de pression étant inférieure à 5 bar.

**14.** Procédé selon la revendication 13, dans lequel le débit est tel que le nombre de Péclet de l'agent polluant (3) dans l'écoulement du fluide (2) parcourant la longueur des zones (13) d'assainissement dans le sens de l'écoulement est inférieur à $10^4$.

**15.** Procédé selon l'une quelconque des revendications 13 et 14, dans lequel l'agent d'assainissement autonome (11) est adapté à capturer l'agent polluant (3) et est au moins choisi parmi une cyclodextrine, un charbon actif, un calixarène, de l'alumine activée, un gel de silice, du graphite, une argile et une zéolithe.

**16.** Procédé selon l'une quelconque des revendications 13 et 14, dans lequel l'agent d'assainissement autonome (11) est adapté à dégrader l'agent polluant (3) et est au moins choisi parmi une laccase, une peroxydase de raifort, une lignine peroxydase, une manganèse péroxydase, une tyrosinase, du permanganate de potassium, un persulfate et une enzyme fongique.

## Patentansprüche

**1.** Fluidische Sanierungsvorrichtung (1), die dazu geeignet ist, ein Fluid (2) von einem Schadstoff (3) zu reinigen, mit einem fluidischen Sanierungsnetz (8), **dadurch gekennzeichnet, dass** das fluidische Sanierungsnetz ein dreidimensionales Netz von mikrofluidischen Kanälen (9) ist, wobei jeder mikrofluidische Kanal (9) durch eine oder mehrere gegenüber dem Fluid (2) dichte Wände bestimmt ist, jeder mikrofluidische Kanal (9) mindestens einen Bereich (13) auf der Innenfläche des mikrofluidischen Kanals (9) mit einem selbstständigen Sanierungsmittel (11) umfasst und jeder mikrofluidische Kanal (9) an einem solchen Bereich (13) eine Höhe von weniger als 60 $\mu$m in einer normalen

Richtung zur Hauptströmungsrichtung (12) des Fluids aufweist, wobei das selbstständige Sanierungsmittel (11) wie folgt ausgewählt wird:

--aus einem Cyclodextrin, einer Aktivkohle, einem Calixaren, aktiviertem Aluminiumoxid, einem Kieselgel, Graphit, einem Ton und einem Zeolith, so dass das selbstständige Sanierungsmittel (11) so konfiguriert ist, dass es den Schadstoff (3) einfängt, oder
--aus einer Laccase, einer Kren-Peroxidase, einer Lignin-Peroxidase, einer Mangan-Peroxidase, einer Tyrosinase, Kaliumpermanganat, einem Persulfat und einem Pilz-Enzym, so dass das selbstständige Sanierungsmittel (11) so konfiguriert ist, dass es den Schadstoff (3) abbaut,
das selbstständige Sanierungsmittel und die Bemessung der Bereiche (13) sind so konfiguriert, dass sie eine Erfassung und/oder einen Abbau von mindestens 10 % des Schadstoffs (3) durch die Bereiche für mindestens eine Durchflussrate des zu reinigenden Fluids ermöglichen, wobei die Vorrichtung eine Vielzahl von Verteilerkanälen (40) und eine Vielzahl von Sammelkanälen (41) umfasst, wobei das fluidische Sanierungsnetz (8) die Verteilerkanäle und die Sammelkanäle verbindet und mindestens durch ein Netz von parallel verbundenen Mikrofluidkanälen (9) implementiert wird,
mindestens eine Wand eines mikrofluidischen Kanals (9) eine Vielzahl von Erhebungen (38) aufweist, die sich in mindestens einer Richtung erstrecken, die sich von der Hauptströmungsrichtung (12) des Fluids unterscheidet, wobei die fluidische Vorrichtung so konfiguriert ist, dass, wenn der Absolutwert der Druckdifferenz weniger als 5 bar beträgt, der hydrodynamische Widerstand des oder der Verteilerkanäle und des oder der Sammelkanäle zwingend kleiner ist als der hydrodynamische Widerstand des fluidischen Sanierungsnetzes.

**2.** Fluidische Vorrichtung (1) nach Anspruch 1, wobei das dreidimensionale Netz von mikrofluidischen Kanälen (9) eine Überlagerung von zweidimensionalen Netzen von mikrofluidischen Kanälen (9) umfasst, wobei das fluidische Sanierungsnetz (8) die Verteilerkanäle (40) und die Sammelkanäle (41) verbindet.

**3.** Vorrichtung nach Anspruch 1, die mindestens drei aufeinander gestapelte Schichten (17, 18) umfasst, wobei mindestens zwei Seiten einer oder mehrerer Schichten gegenüber mindestens zwei Schichten ein vertieftes Muster aufweisen, das so konfiguriert ist, dass es mindestens zwei zweidimensionale Netze von mikrofluidischen Kanälen (9) bildet, wenn die mindestens drei Schichten aufeinander gestapelt sind.

**4.** Vorrichtung nach Anspruch 1 bis 3, umfassend mindestens drei aufeinander gestapelte Schichten (17, 18), wobei mindestens zwei Seiten einer oder mehrerer Schichten gegenüber mindestens zwei Schichten ein vertieftes Muster aufweisen, das so konfiguriert ist, dass es mindestens zwei zweidimensionale Netze von mikrofluidischen Kanälen (9) bildet, wenn die mindestens drei Schichten aufeinander gestapelt sind, wobei ein solches Muster so konfiguriert ist, dass es mindestens teilweise einen oder mehrere Verteilerkanäle (40) und mindestens teilweise einen oder mehrere Sammelkanäle (41) bildet.

**5.** Vorrichtung nach einem der Ansprüche 3 oder 4, mit mindestens einem primären Kanal (19), der durch eine Vielzahl von benachbarten Schichten (17, 18) verläuft, um jeweils in mindestens einen Verteilerkanal (40) und/oder mindestens einen Sammelkanal (41) zu münden, die zwischen zwei Schichten (17, 18) ausgebildet sind.

**6.** Vorrichtung nach einem der Ansprüche 3 bis 5, wobei der Stapel (14) eine Überlagerung von Teilstapeln umfasst, die jeweils aus zwei Schichten (17, 18) gebildet sind, wobei die beiden Schichten aus unterschiedlichen Materialien gefertigt sind.

**7.** Vorrichtung nach einem der Ansprüche 3 bis 5, wobei der Stapel (14) eine Überlagerung von Teilstapeln umfasst, die jeweils aus drei aufeinanderfolgenden Schichten (17, 18) gebildet sind, wobei die beiden Schichten auf beiden Seiten des Teilstapels aus demselben Material gefertigt sind.

**8.** Vorrichtung nach einem der Ansprüche 3 bis 7, wobei das Material einer Schicht (17, 18) ein Polykondensat von Cyclodextrinen umfasst.

**9.** Vorrichtung nach einem der Ansprüche 3 bis 8, wobei das Material von mindestens zwei sich in Kontakt befindlichen Schichten (17, 18) ein Blockcopolymer umfasst, wobei das Blockcopolymer eine Glasübergangstemperatur von weniger als 0 °C aufweist und das Material ein Young'sches Modul von weniger als 10 MPa aufweist.

**10.** Vorrichtung nach einem der Ansprüche 3 bis 9, wobei das Material einer Schicht (17, 18) ein thermoplastisches Styrol-Elastomer umfasst.

**11.** Vorrichtung nach einem der Ansprüche 1 bis 10, wobei das selbstständige Sanierungsmittel (11) zum Einfangen des Schadstoffs (3) geeignet ist und zumindest aus einem Cyclodextrin, einer Aktivkohle, einem Calixaren, aktiviertem Aluminiumoxid, einem Kieselgel, Graphit, einem Ton und einem Zeolith ausgewählt wird.

**12.** Vorrichtung nach einem der Ansprüche 1 bis 11, wobei das selbstständige Sanierungsmittel (11) zum Abbau des Schadstoffs (3) geeignet ist und mindestens aus einer Laccase, einer Kren-Peroxidase, einer Lignin-Peroxidase, einer Mangan-Peroxidase, einer Tyrosinase, Kaliumpermanganat, einem Persulfat und einem Pilzenzym ausgewählt wird.

**13.** Sanierungsverfahren, das dazu geeignet ist, ein Fluid (2) von einem Schadstoff (3) zu reinigen, mit einem Schritt, bei dem das Fluid (2) durch ein dreidimensionales fluidisches Sanierungsnetz (8) aus mikrofluidischen Kanälen (9) mit einer Durchflussrate des zu reinigenden Fluids geleitet wird, jeder mikrofluidische Kanal (9) mindestens einen Bereich (13) auf der Innenfläche des mikrofluidischen Kanals (9) mit einem selbständigen Sanierungsmittel (11) aufweist und jeder mikrofluidische Kanal (9) an einem solchen Bereich (13) eine Höhe von weniger als 60 $\mu$m in einer Richtung senkrecht zur Hauptströmungsrichtung (12) des Fluids aufweist, wobei das selbständige Sanierungsmittel (11) wie folgt ausgewählt wird:

--aus einem Cyclodextrin, einer Aktivkohle, einem Calixaren, aktiviertem Aluminiumoxid, einem Kieselgel, Graphit, einem Ton und einem Zeolith, so dass das selbstständige Sanierungsmittel (11) so konfiguriert ist, dass es den Schadstoff (3) einfängt, oder
--aus einer Laccase, einer Kren-Peroxidase, einer Lignin-Peroxidase, einer Mangan-Peroxidase, einer Tyrosinase, Kaliumpermanganat, einem Persulfat und einem Pilz-Enzym, so dass das selbstständige Sanierungsmittel (11) so konfiguriert ist, dass es den Schadstoff (3) abbaut,

wobei das selbstständige Sanierungsmittel und die Bemessung der Bereiche (13) so konfiguriert sind, dass sie eine Erfassung und/oder einen Abbau von mindestens 10 % des Schadstoffs (3) durch die Bereiche ermöglichen (11), wenn das Fluid (2) mit der Strömungsrate durch das mikrofluidische Kanalnetz (9) fließt, einschließlich der Steuerung einer Druckdifferenz zwischen dem Einlass (4) und dem Auslass (5) einer Vorrichtung (1), um die Strömungsrate des Fluids (2) in der Vorrichtung (1) zu treiben, die Vorrichtung (2) eine Vielzahl von Verteilerkanälen (40), die mit dem Einlass (4) verbunden sind, und eine Vielzahl von Sammelkanälen (41), die mit dem Auslass (5) verbunden sind, umfasst, das fluidische Sanierungsnetz (8) die Verteilerkanäle und die Sammelkanäle verbindet, der hydrodynamische Widerstand des oder der Verteilerkanäle und des oder der Sammelkanäle zwingend kleiner als der hydrodynamische Widerstand des fluidischen Sanierungsnetzes ist und der Absolutwert der Druckdifferenz weniger als 5 bar beträgt.

**14.** Verfahren nach Anspruch 13, wobei die Durchflussrate so ist, dass die Pécletsche Zahl des Schadstoffs (3) in der Strömung des Fluids (2), das die Länge der Sanierungsbereiche (13) in Strömungsrichtung durchläuft, kleiner als $10^4$ ist.

**15.** Verfahren nach einem der Ansprüche 13 und 14, wobei das selbstständige Sanierungsmittel (11) zum Einfangen des Schadstoffs (3) geeignet ist und zumindest aus einem Cyclodextrin, einer Aktivkohle, einem Calixaren, aktiviertem Aluminiumoxid, einem Kieselgel, Graphit, einem Ton und einem Zeolith ausgewählt wird.

**16.** Verfahren nach einem der Ansprüche 13 und 14, wobei das selbstständige Sanierungsmittel (11) zum Abbau des Schadstoffs (3) geeignet ist und mindestens aus einer Laccase, einer Kren-Peroxidase, einer Lignin-Peroxidase, einer Mangan-Peroxidase, einer Tyrosinase, Kaliumpermanganat, einem Persulfat und einem Pilz-Enzym ausgewählt wird.

## Claims

**1.** A fluidic sanitation device (1) configured to purify a fluid (2) of a polluting agent (3), comprising a fluidic sanitation network (8), **characterized in that** the fluidic sanitation network is a three-dimensional network of microfluidic channels (9), each microfluidic channel (9) being defined by one or more fluid-tight walls (2), each microfluidic channel (9) comprising at least one zone (13) on the inner surface of said microfluidic channel (9) presenting an autonomous sanitizing agent (11) and each microfluidic channel (9) presenting at the level of such a zone (13) a height of less than 60 $\mu$m in a direction normal to the main direction of flow (12) of the fluid, the autonomous sanitizing agent (11) being chosen:

-- from cyclodextrin, activated carbon, calixarene, activated alumina, silica gel, graphite, clay and zeolite so that the self-contained sanitizing agent (11) is configured to capture the pollutant (3), or

-- one of laccase, horseradish peroxidase, lignin peroxidase, manganese peroxidase, tyrosinase, potassium permanganate, persulfate and a fungal enzyme, so that the self-contained sanitizing agent (11) is configured to degrade the pollutant (3),

the self-contained sanitizing agent and the sizing of said zones (13) being configured to enable capture and/or degradation of at least 10% of the pollutant (3) by said zones, for at least one flow rate of the fluid to be purified, the device comprising a plurality of distribution channels (40) and a plurality of collection channels (41), the sanitizing fluidic network (8) connecting the distribution channels and the collection channels and being implemented at least by a network of microfluidic channels (9) connected in parallel,

at least one wall of a microfluidic channel (9) having a plurality of reliefs (38) extending in at least one direction different from the main fluid flow direction (12),

the fluidic device being configured so that, when the absolute value of the pressure difference is less than 5 bar, the hydrodynamic resistance of the distribution channel(s) and the collection channel(s) is strictly less than the hydrodynamic resistance of the fluidic sewage network.

2. A fluidic device (1) according to claim 1, in which the three-dimensional network of microfluidic channels (9) comprises a superposition of two-dimensional networks of microfluidic channels (9), the fluidic sanitation network (8) connecting the distribution channels (40) and the collection channels (41).

3. A device according to claim 1, comprising at least three stacked layers (17, 18), at least two faces of one or more layers having, opposite at least two layers, a recessed pattern configured to form at least two two-dimensional arrays of microfluidic channels (9) when the at least three layers are stacked.

4. A device according to claims 1-3, comprising at least three stacked layers (17, 18), at least two faces of one or more layers having, facing at least two layers, a recessed pattern configured to form at least two two-dimensional arrays of microfluidic channels (9) when the at least three layers are stacked, wherein a said pattern is configured to form at least in part one or more distribution channels (40), and at least in part one or more collection channels (41).

5. A device according to one of claims 3 or 4, comprising at least one primary channel (19) passing through a plurality of adjacent layers (17, 18) to open respectively into at least one distribution channel (40) and/or at least one collection channel (41) formed between two layers (17, 18).

6. Device according to one of claims 3 to 5, in which the stack (14) comprises a superposition of sub-stacks each formed by two layers (17, 18), said two layers being made of different materials.

7. Device according to one of claims 3 to 5, in which the stack (14) comprises a superposition of sub-stacks each formed by three consecutive layers (17, 18), the two layers on either side of the sub-stack being in the same material.

8. A device according to any of claims 3 to 7 in which the material of a layer (17, 18) comprises a cyclodextrin polycondensate.

9. A device according to one of claims 3 to 8 in which the material of at least two layers (17, 18) in contact comprises a block copolymer, the block copolymer having a glass transition temperature below 0°C and the material having a Young's modulus below 10 MPa.

10. A device according to any one of claims 3 to 9 wherein the material of a layer (17, 18) comprises a styrenic thermoplastic elastomer.

11. A device according to any of claims 1 to 10, wherein the self-contained sanitizing agent (11) is adapted to capture the polluting agent (3) and is at least selected from cyclodextrin, activated carbon, calixarene, activated alumina, silica gel, graphite, clay and zeolite.

12. A device according to any one of claims 1 to 11, wherein the self-contained sanitizing agent (11) is adapted to degrade the pollutant (3) and is at least selected from laccase, horseradish peroxidase, lignin peroxidase, manganese peroxidase, tyrosinase, potassium permanganate, persulfate and a fungal enzyme.

13. A sanitization process suitable for purifying a fluid (2) from a pollutant (3), comprising a step in which the fluid (2) is

passed through a three-dimensional sanitization fluid network (8) of microfluidic channels (9) at a flow rate of the fluid to be purified, each microfluidic channel (9) comprising at least one zone (13) on the inner surface of said microfluidic channel (9) presenting an autonomous sanitizing agent (11) and each microfluidic channel (9) presenting at the level of such a zone (13) a height of less than 60 μm in a direction normal to the main flow direction (12) of the fluid, the autonomous sanitizing agent (11) being chosen:

-- from cyclodextrin, activated carbon, calixarene, activated alumina, silica gel, graphite, clay and zeolite so that the self-contained sanitizing agent (11) is configured to capture the pollutant (3), or
-- one of laccase, horseradish peroxidase, lignin peroxidase, manganese peroxidase, tyrosinase, potassium permanganate, persulfate and a fungal enzyme, so that the self-contained sanitizing agent (11) is configured to degrade the pollutant (3),

the self-sustaining sanitizing agent and the sizing of said zones (13) being configured to enable (11) capture and/or degradation of at least 10% of the pollutant (3) by said zones during the flow of fluid (2) at said flow rate in the microfluidic channel network (9), comprising controlling a pressure difference between the inlet (4) and outlet (5) of a device (1) so as to drive said fluid flow (2) in said device (1), the device (2) comprising a plurality of distribution channels (40) connected to the inlet (4) and a plurality of collection channels (41) connected to the outlet (5), the sewage fluid network (8) connecting the distribution channels and the collection channels, the hydrodynamic resistance of the distribution channel(s) and the collection channel(s) being strictly less than the hydrodynamic resistance of the sewage fluid network and the absolute value of the pressure difference being less than 5 bar.

**14.** Method according to claim 13, in which the flow rate is such that the Péclet number of the pollutant (3) in the flow of the fluid (2) traversing the length of the sanitation zones (13) in the direction of flow is less than$^{104}$.

**15.** A process according to any one of claims 13 and 14, wherein the self-contained sanitizing agent (11) is adapted to capture the pollutant (3) and is at least selected from cyclodextrin, activated carbon, calixarene, activated alumina, silica gel, graphite, clay and zeolite.

**16.** A process according to any one of claims 13 and 14, wherein the self-contained sanitizing agent (11) is adapted to degrade the polluting agent (3) and is at least selected from laccase, horseradish peroxidase, lignin peroxidase, manganese peroxidase, tyrosinase, potassium permanganate, persulfate and a fungal enzyme.

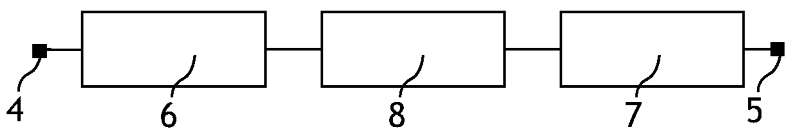


Figure 1

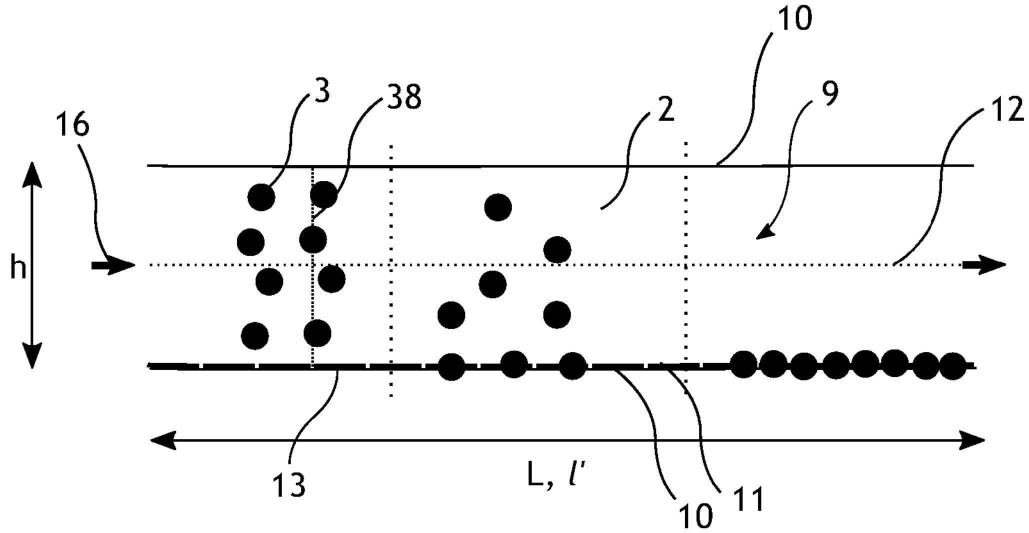


Figure 2

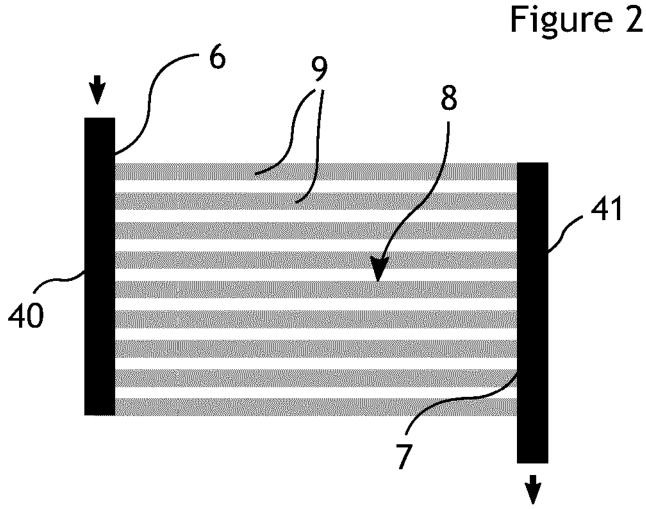


Figure 3

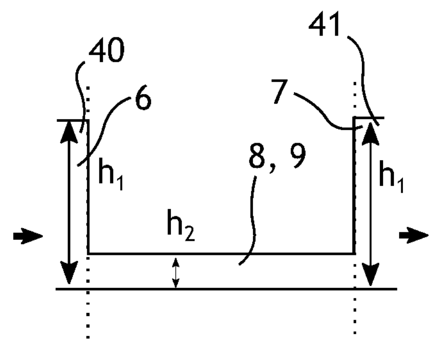


Figure 4

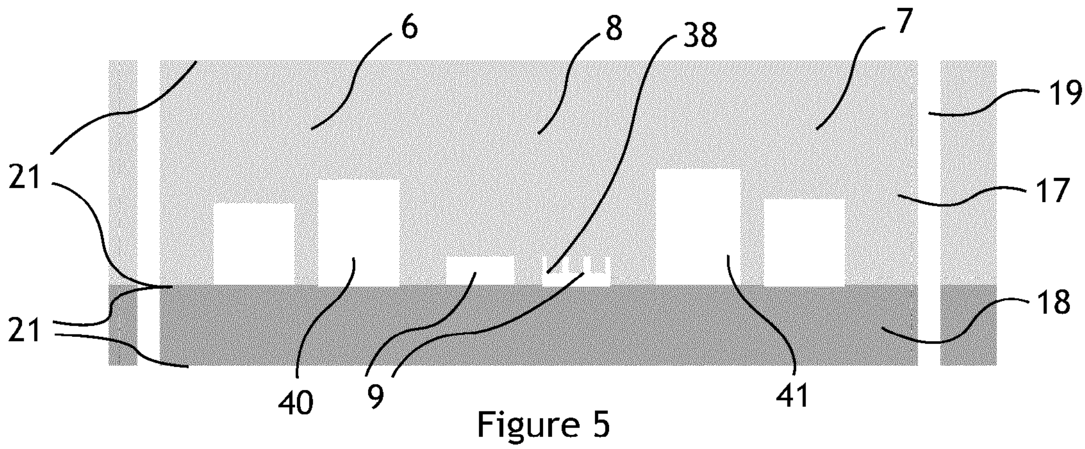


Figure 5

**FIG. 6**

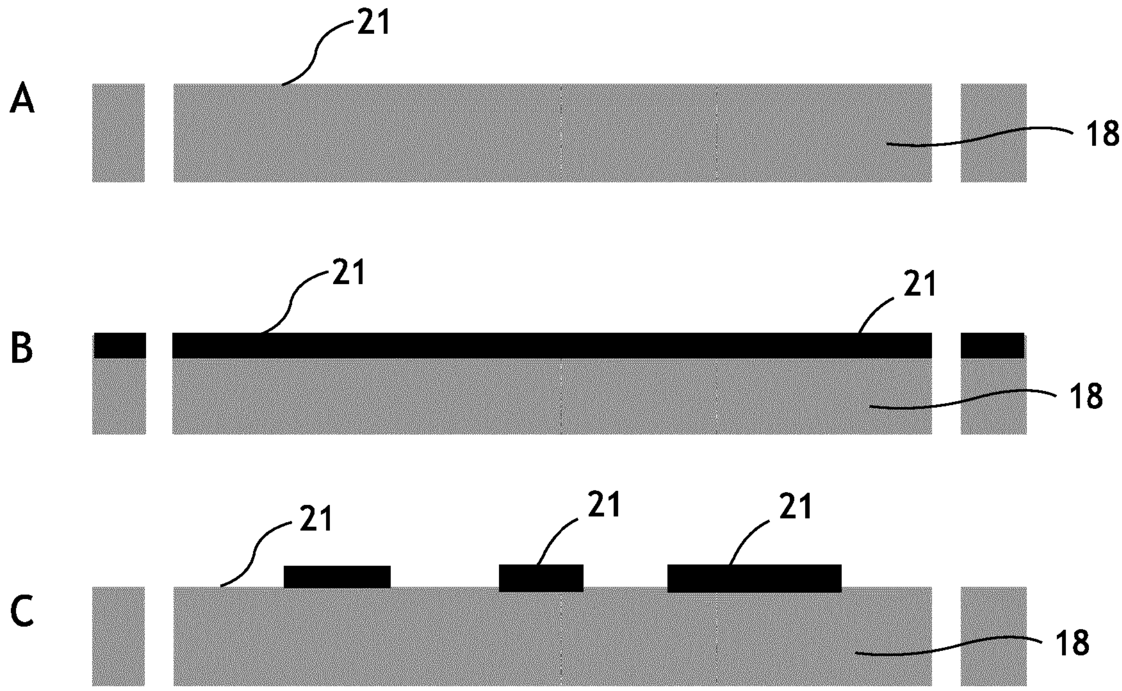


**FIG. 7**

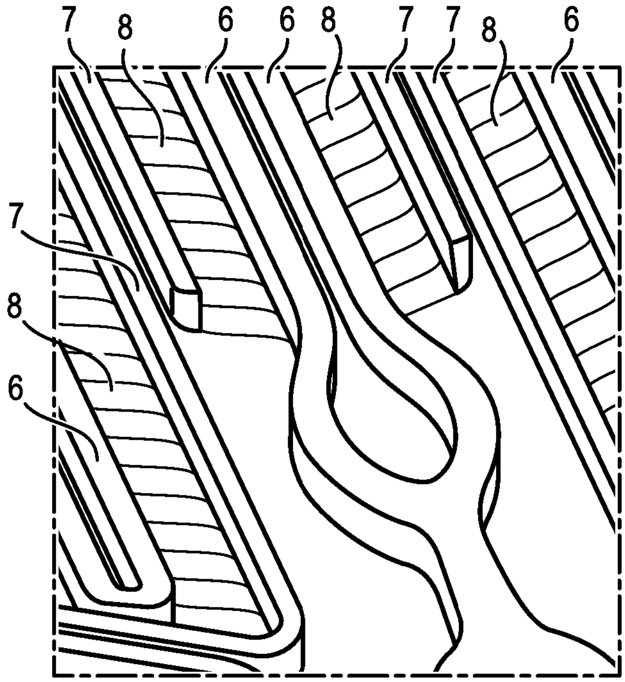

FIG. 8

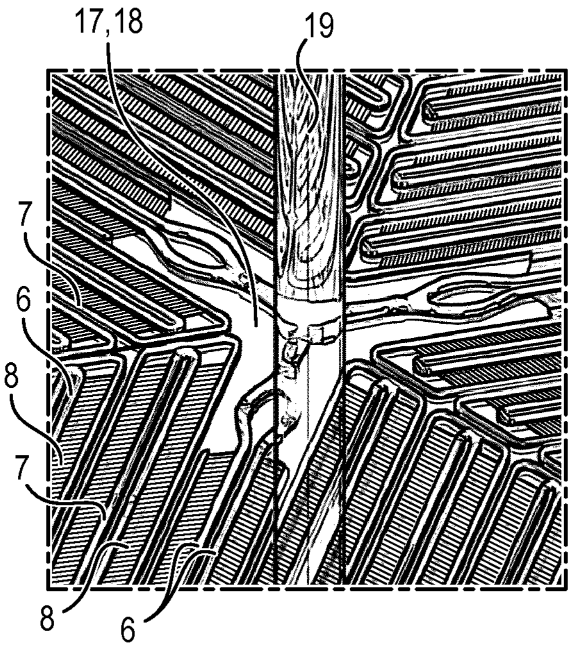


FIG. 9

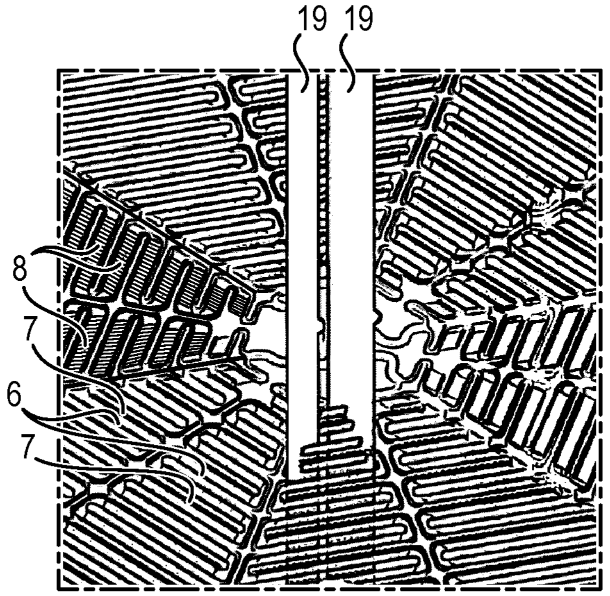


FIG. 10

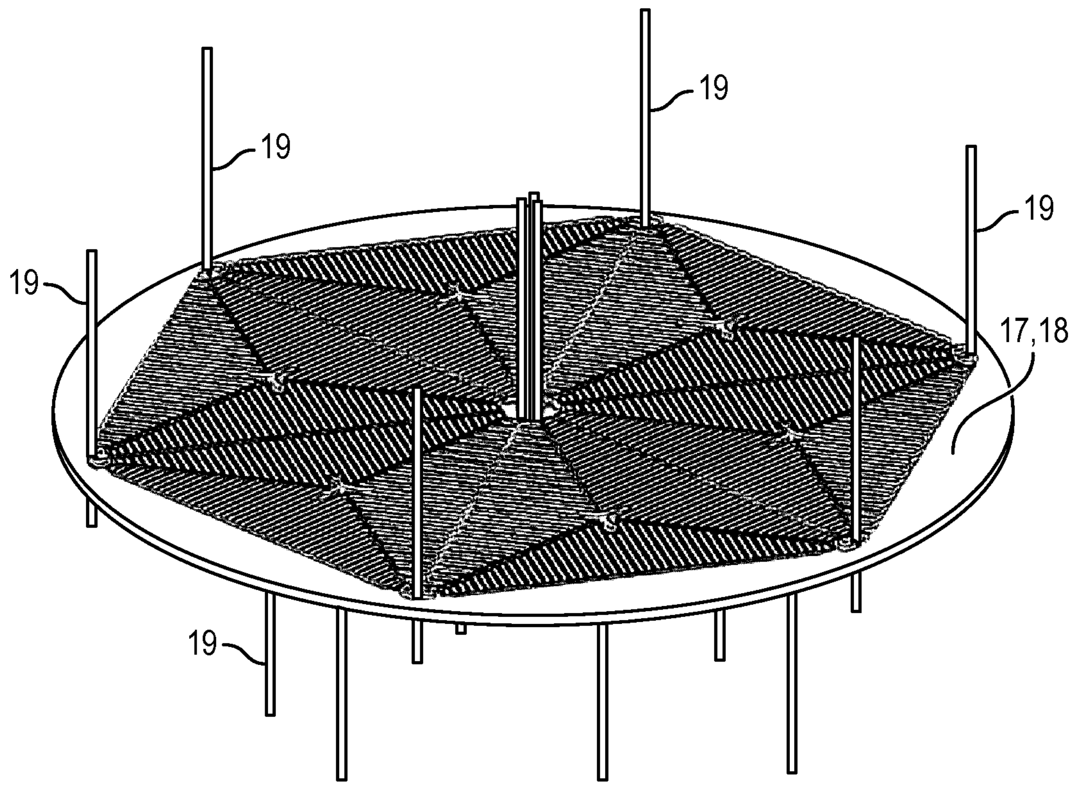

FIG. 11

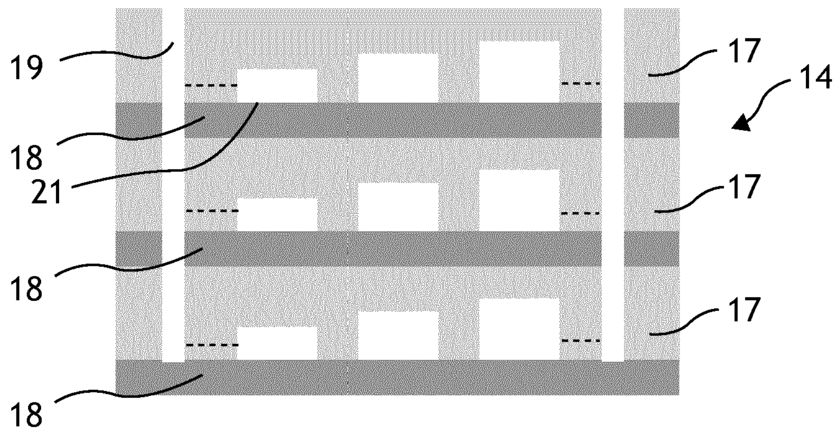


FIG. 12

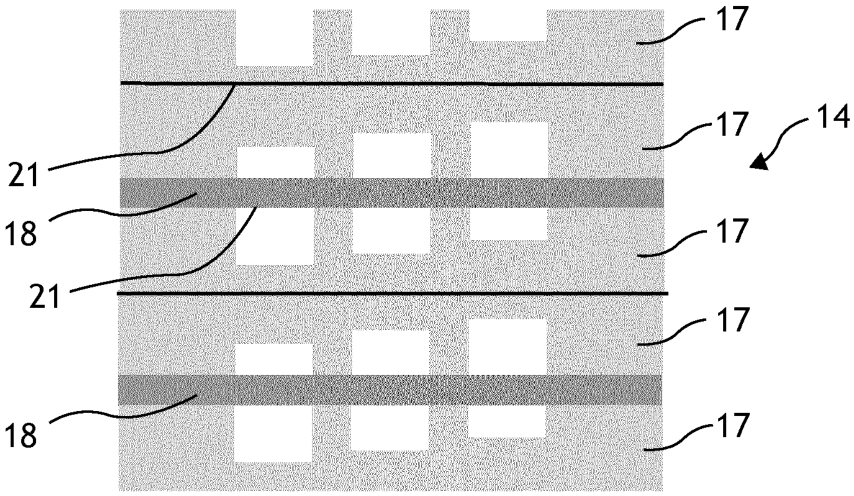


FIG. 13

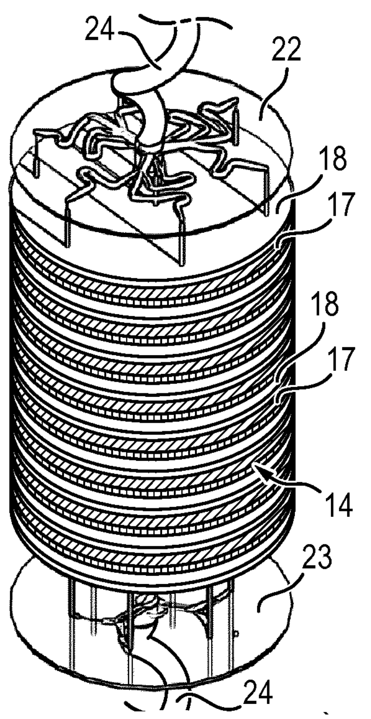

FIG. 14

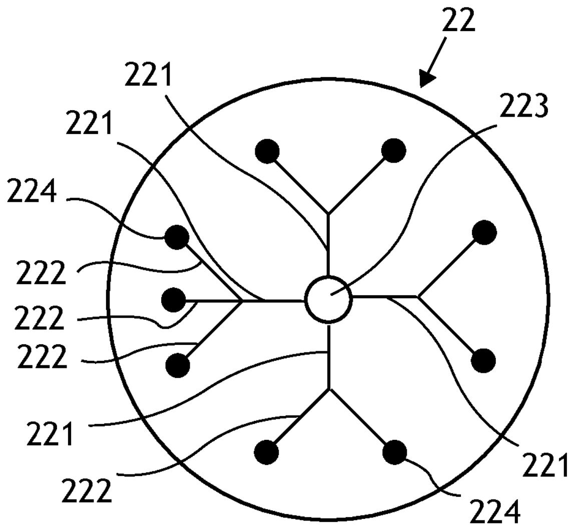


FIG. 15

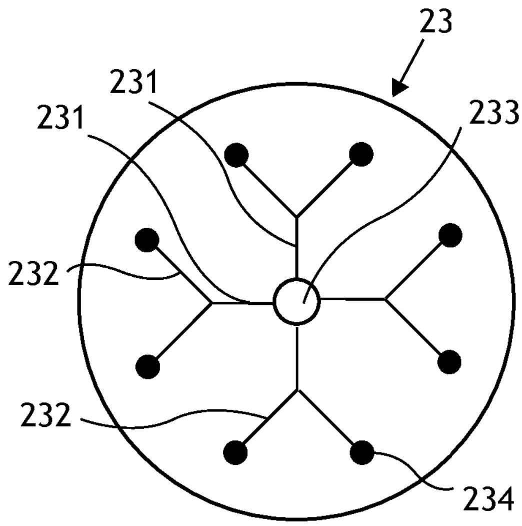


FIG. 16

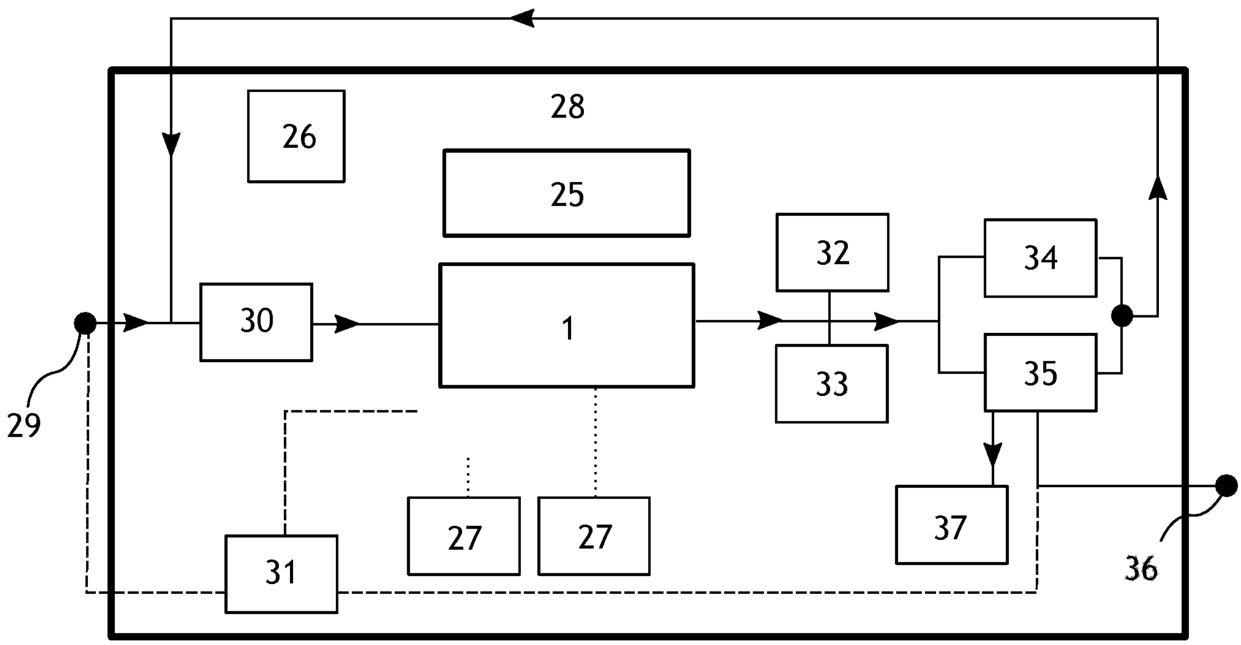

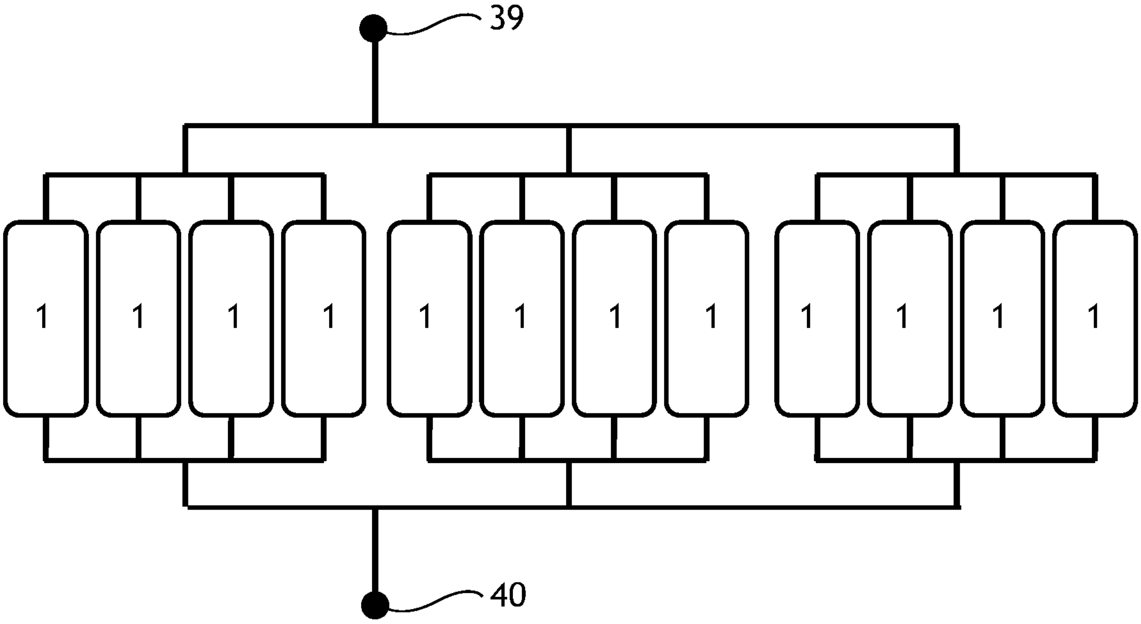


Figure 17

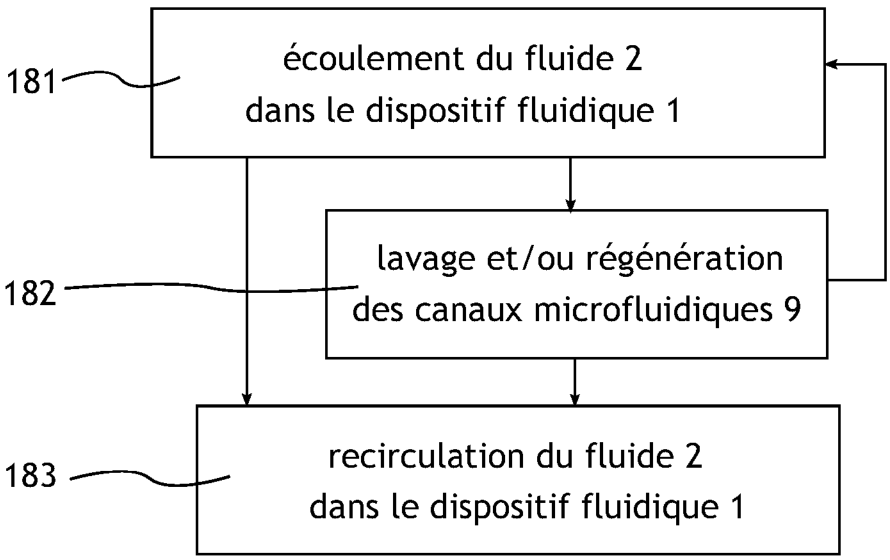


Figure 18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5895573 A
- WO 8806941 A
- US 20170081219 A
- US 7740752 B
- WO 2017134250 A
- FR 3047484


### Littérature non-brevet citée dans la description


- *Stockholm Convention on persistant organic pollutants,* 2001
- **WANG, N. ; ZHANG, X. ; WANG, Y. ; YU, W. ; CHAN, H. L.** Microfluidic reactors for photocatalytic water purification. *, Lab on a Chip,* 2014, vol. 14 (6), 1074-1082
- **WANG et al.** [it] moy not be used directly for practical water purification application. *IV. Discussion*